(19)

Europäisches
Patentamt
European
Patent Office
Office européen
des brevets

(11)     **EP 3 633 478 B1**

(12)                          **EUROPEAN PATENT SPECIFICATION**

(45) Date of publication and mention
of the grant of the patent:
**18.10.2023   Bulletin 2023/42**

(21) Application number: **18805763.2**

(22) Date of filing: **18.05.2018**

(51) International Patent Classification (IPC):
**G05D 1/02** *(2020.01)*          **G01C 21/20** *(2006.01)*
**G06V 20/10** *(2022.01)*

(52) Cooperative Patent Classification (CPC):
**G01C 21/20; G05D 1/0242; G05D 1/0274;
G06V 20/10;** G05D 2201/0207

(86) International application number:
**PCT/CN2018/087541**

(87) International publication number:
**WO 2018/214825 (29.11.2018 Gazette 2018/48)**

(54) **METHOD AND DEVICE FOR ASSESSING PROBABILITY OF PRESENCE OF OBSTACLE IN
UNKNOWN POSITION**

VERFAHREN UND VORRICHTUNG ZUR BEURTEILUNG DER WAHRSCHEINLICHKEIT DES
VORHANDENSEINS EINES HINDERNISSES IN EINER UNBEKANNTEN POSITION

PROCÉDÉ ET DISPOSITIF D'ÉVALUATION DE PROBABILITÉ DE PRÉSENCE D'OBSTACLE DANS
UNE POSITION INCONNUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.05.2017   CN 201710384494
26.05.2017   CN 201710384493**

(43) Date of publication of application:
**08.04.2020   Bulletin 2020/15**

(73) Proprietor: **Hangzhou Hikrobot Co., Ltd.
Hangzhou, Zhejiang (CN)**

(72) Inventor: **WEI, Qingtong
Hangzhou, Zhejiang 310051 (CN)**

(74) Representative: **Yang, Shu
Withers & Rogers LLP
2 London Bridge
London SE1 9RA (GB)**

(56) References cited:
CN-A- 103 472 823          CN-A- 104 932 494
CN-A- 104 950 883          CN-A- 105 467 992
CN-A- 106 197 421          CN-A- 106 662 646
KR-A- 20090 104 393        US-A1- 2009 149 990
US-A1- 2016 062 361        US-A1- 2016 069 691

**EP 3 633 478 B1**

**Description**

**TECHNICAL FIELD**

The present disclosure relates to the field of computer technologies, and more particularly, relates to a method of detecting presence probability of obstacle in an unknown position, a terminal and a storage medium.

**BACKGROUND**

When a smart device enters a new region, generally, it is necessary for the smart device to establish a map. A conventional method for establishing the map is as follows: a user establishes a connection between a mobile phone and the smart device; the smart device sends a currently established map to the mobile phone or a computer; the mobile phone or the computer displays the established map and displays unknown positions included in the established map; and the user controls the smart device to move through the mobile phone, determine presence probability of obstacle in the unknown positions during the movement, and then the smart phone updates the established map according to the presence probability of obstacle in the unknown positions.

US2009/149990 A1 discloses a method, medium, and apparatus for performing path planning of a mobile robot. The apparatus for performing path planning of a mobile robot includes a coarse map generation unit to generate a coarse map composed of a plurality of cells; a fine map generation unit to generate a fine map composed of a plurality of sub-cells into which at least one of the plurality of cells is divided, and a path generation unit to control the fine map generation unit to generate the fine map with respect to a specified position in the coarse map generated through the coarse map generation unit. The method of performing path planning of a mobile robot includes generating a coarse map composed of a plurality of cells, generating a fine map composed of a plurality of sub-cells into which at least one of the plurality of cells, which neighbors the cell where an obstacle exists, is divided, generating a moving path whereby the mobile robot can pass a narrow passage by using the fine map, and updating the coarse map by reflecting the moving path.

US2016/062361 A1 discloses an autonomous moving body that executes a mode in which an autonomous moving body: outputs a motor control amount from travel commands input by an operator; estimates the position of the autonomous moving body on an environment map, obtains position information of obstacles near the autonomous moving body, associates position information of the obstacles with times that the position information of the obstacles were obtained, stores the same in the storage unit as environment map restoration data, generates a travel schedule, and stores the same in the storage unit. In a replication mode, the autonomous moving body estimates the position of the autonomous moving body on the environment map, obtains position information of the obstacles near the autonomous moving body, reads the environment map restoration data that corresponds to the estimated position of the autonomous moving body, updates the environment map, creates a control amount for the motor, so as to travel on the updated environment map in accordance with the schedule, and inputs the same to the travel unit.

**SUMMARY**

In order to solve the problems that a lot of time is consumed and a large amount of storage resources are occupied, embodiments of the present disclosure provide a method according to claim 1, a non-transitory computer-readable storage medium according to claim 12 and a terminal according to claim 13.

**BRIEF DESCRIPTION OF THE DRAWINGS**

FIG. 1 is a schematic flowchart of a method for detecting a presence probability of obstacle in an unknown position according to an embodiment of the present disclosure;

FIG. 2 is a schematic flowchart of a method for detecting a presence probability of obstacle in an unknown position according to another embodiment of the present disclosure;

FIG. 3 is a schematic diagram of a grid map according to an embodiment of the present disclosure;

FIG. 4 is a schematic flowchart of selection of a target frontier according to an embodiment of the present disclosure;

FIG. 5 is a schematic diagram of a frontier region in the grid map according to an embodiment of the present disclosure;

FIG. 6 is a schematic diagram of a frontier region in the grid map according to an embodiment of the present disclosure;

FIG. 7 is a schematic diagram of a candidate frontier in the grid map according to an embodiment of the present disclosure;

FIG. 8 is a schematic diagram of movement of a smart device according to an embodiment of the present disclosure;

FIG. 9 is a schematic flowchart of a method for correcting the grid map according to an embodiment of the present disclosure;

FIG. 10 is a schematic diagram of a topological distance and a grid distance according to an embodiment of the present disclosure;

FIG. 11 is a schematic diagram of a method for correcting a position of a topological node based on closed-loop detection according to an embodiment of the present disclosure;

FIG. 12 is a schematic diagram of a navigation path according to an embodiment of the present disclosure;

FIG. 13 is a schematic diagram of a position after a movement to a closed-loop topological node according to an embodiment of the present disclosure;

FIG. 14 is a schematic structural diagram of an apparatus for detecting a presence probability of obstacle in an unknown position according to an embodiment of the present disclosure;

FIG. 15 is a schematic structural diagram of an apparatus for detecting a presence probability of obstacle in an unknown position according to another embodiment of the present disclosure;

FIG. 16 is a schematic structural diagram of an apparatus for detecting a presence probability of obstacle in an unknown position according to another embodiment of the present disclosure;

FIG. 17 is a schematic structural diagram of an apparatus for detecting a presence probability of obstacle in an unknown position according to another embodiment of the present disclosure;

FIG. 18 is a schematic structural diagram of an apparatus for correcting a position of a topological node based on closed-loop detection according to an embodiment of the present disclosure; and

FIG. 19 is a schematic structural diagram of a smart device according to an embodiment of the present disclosure.

## DETAILED DESCRIPTION

The embodiments of the present disclosure are described in further detail with reference to the accompanying drawings, to make the objects, technical solutions, and advantages of the present disclosure more clearly.

In the process for implementing related arts, if the target region is relatively large and the target region is complex, it will take the user a plenty of time to control a smart device to move through a cell phone.

An embodiment of the present disclosure provides a method of detecting presence probability of obstacle in an unknown position. An executing subject of the method may be a smart device or a control terminal of the smart device. The smart device may be a device with an autonomous movement function, such as a robot, or the like. The control terminal can be configured to control the smart device to move, and may be, for example, a computer.

The control terminal may be provided with a processor, a memory, a transceiver, and the like therein. The processor may be a central processing unit (CPU) or the like, and configured to detect a presence probability of obstacle in an unknown position. The memory may be a random access memory (RAM), a flash memory (Flash) or the like, and configured to store data required in the process of detecting the presence probability of obstacle in the unknown position, and generated data. The transceiver can be configured to receive and send messages, and send movement instructions and the like to the smart device. The control terminal may further be provided with an input/output device such as a screen therein, wherein the screen may be configured to display a grid map or the like. In addition, the control terminal may further comprise components such as Bluetooth, a speaker, and a power source and etc.

The smart device may be provided with a processor, a memory, a transceiver, and the like therein. The processor may be a CPU or the like, and configured to detect a presence probability of obstacle in the unknown position. The memory may be a RAM, a Flash or the like, and may be configured to store data required in the process of detecting the presence probability of obstacle in the unknown position, and generated data. The transceiver may be configured to receive and send messages or the like. The smart device can further be provided with a distance sensor and traveling components therein. The distance sensor may be an infrared sensor, an ultrasonic sensor or the like, and configured to determine position information of the smart device, position information of an obstacle, and the like. The traveling components can be configured to move the smart device, comprising a forward wheel, a steering wheel, a motor and the like, and can be electrically connected to the processor and controlled by the processor. The smart device may further be provided with an input/output device such as a screen therein, wherein the screen may be configured to display a grid map or the like. In addition, the smart device may further include components such as Bluetooth, a speaker, and a power source.

Before performing the embodiments of the present disclosure, the concepts of nouns involved in the embodiments of the present disclosure are first introduced as follows:

a grid map, in which a region is divided into a series of grids, each of which corresponds to a presence probability of obstacle; and
a topological map, in which a region is represented as a topological graph composed of nodes and edges.

In the embodiments of the present disclosure, the solutions are described in detail using the scenario where an executing subject is a smart device as an example. Other cases are similar thereto, and are thus not described repeatedly in the embodiments of the present disclosure.

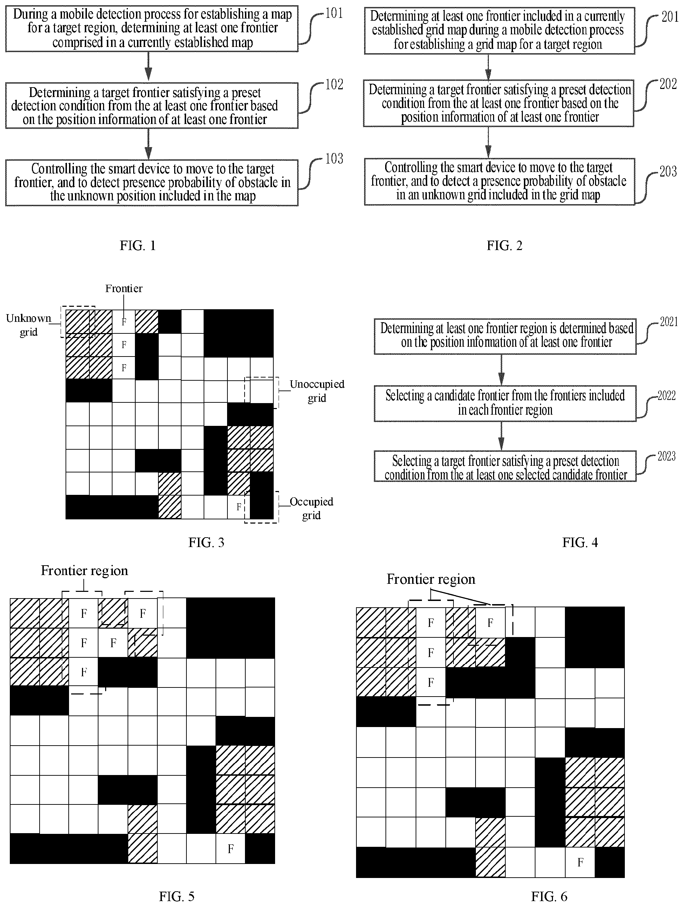

As illustrated in FIG. 1, the processing flow of the method can comprise the following steps.

In step 101, during a mobile detection process for establishing a map for a target region, at least one frontier comprised in a currently established map is determined.

The frontier is a position point which is in an unoccupied position and is adjacent to a border between the unoccupied position and an unknown position in the map. The established map is an established geometric map or an established grid map. The geometric map comprises a moving trajectory formed by a plurality of position points passed by a smart device during the movement process. The grid map is formed by grids, comprising unknown grids, unoccupied grids, and occupied grids. The details are described hereinafter.

In practice, after the smart device enters a new region, if a map of this region is not stored in the smart device, this region will be subsequently referred to as a target region. If the user wants to control the smart device to establish a map autonomously, the smart device can be placed at a certain position point in this region, and is then turned on. The smart device is movable and can establish a map during the movement process, and determine, within the established map, at least one frontier comprised in the currently established map.

In step 102, a target frontier satisfying a preset detection condition is determined from the at least one frontier based on the position information of at least one frontier.

The preset detection condition may be preset by a technician and stored in the smart device. The preset detection condition may be, for example, a frontier having a shortest navigation path to the current position point. The navigation path refers to a path that will be passed during the movement from the current position point to the target frontier.

In practice, the smart device may select, from at least one frontier, a frontier having the shortest navigation path to the current position point according to the position information of the at least one frontier, and determine this frontier as the target frontier; or select, from at least one frontier, a frontier with the minimum pose uncertainty, and determine this frontier as the target frontier.

In step 103, the smart device is controlled to move to the target frontier, and the presence probability of obstacle in the unknown position included in the map is detected.

In practice, upon determining the target frontier, the smart device may input the position information of the target frontier and the position information of the current position point into a navigation algorithm. The navigation algorithm can output a navigation path from the current position point to the target frontier. The smart device may control itself to move from the current position point to the target frontier based on the navigation path, and based on its own distance sensor, detect the presence probability of obstacle in the unknown position included in the map.

Upon determining the presence probability of obstacle in the unknown position, the smart device may call a map update program in the device, and acquire the currently stored established map. Then, the presence probability of obstacle in the unknown position and the established map are used as the inputs of the map update program, and the output of the map update program is the updated established map which comprises the presence probability of obstacle in the unknown position determined by the smart device.

Optionally, when the executing subject is a control terminal of the smart device, the smart device may send the detected presence probability of obstacle to the control terminal in which the map update program is provided. The control terminal may call the map update program in the device, and acquire the currently stored established map. Then, the presence probability of obstacle in the unknown position and the established map are used as the inputs of the map update program, and the output of the map update program is the updated established map which includes the presence probability of obstacle in the unknown position determined by the smart device.

As illustrated in FIG. 2, the solutions are described in detail by taking the scenario where the map is a grid map as an example. The processing flow of the method can comprise the following steps.

In step 201, during a mobile detection process for establishing a grid map for a target region, at least one frontier included in a currently established grid map is determined.

When the map is a grid map, the frontier is a center point of a grid which is unoccupied and is adjacent to a border between the unoccupied grid and an unknown grid in the map. The unoccupied grid is a grid in which a presence probability of obstacle is less than a preset value, and the occupied grid is a grid in which a presence probability of obstacle is greater than or equal to the preset value. The preset value (e.g., 0.3) may be preset by a technician and stored in the smart device. The unknown grid is a grid of which a presence probability of obstacle has not be determined yet. For example, as illustrated in FIG. 3, each white small cell indicates an unoccupied grid, each black small cell indicates an occupied grid, and a shadow small cell indicates an unknown grid. A position point marked with "F" in the white small cell is a frontier.

In practice, after the smart device enters a new region, if a grid map of this region is not stored in the smart device, this region will be subsequently referred to as a target region. If the user wants to control the smart device to establish a grid map autonomously, the smart device can be placed at a certain position point in the target region, and an autonomous grid map establishing function of the smart device is then turned on. The smart device can detect a turn-on instruction for the autonomous grid map establishing function. Then, the grid map corresponding to the target region is full of unknown grids each generally having a size of 5 cm*5 cm. Position coordinates at a starting position point are set as (0, 0), and a rectangular coordinate system is established with the starting position point as a coordinate origin and a direction in which the smart device is about to move as a positive direction of a horizontal axis. In this way, the position coordinates of each grid in the grid map are determined. A distance sensor in the smart device at the starting position point can detect a distance between the starting position point and an obstacle.

An embodiment of the present disclosure is described by taking the scenario where the distance sensor is an infrared sensor as an example. The infrared sensor can emit infrared light outwards at 360 degrees, and record an emission time point, and an included angle between an emission direction of the infrared light and the positive direction of the horizontal axis. If an obstacle is present in the environment, the obstacle may reflect the infrared light back. The distance sensor receives the infrared light reflected by the obstacle and records a reception time point of the reflected infrared light. A distance between the obstacle and the starting position point is then calculated by using a formula $L=T*V/2$, wherein L represents the distance between the obstacle and the starting position point, V is the light velocity which is $3*10^8$ m/s, and T is a time difference between receiving the infrared light and emitting the infrared light. In this way, the distance between the starting position point and each obstacle can be calculated to obtain the obstacle information of the starting position point. In addition, since the infrared sensor records the emission direction of the emitted infrared light, and an included angle between the emission direction and the horizontal axis is $\alpha$, the horizontal coordinate and the vertical coordinate of the position where the obstacle is located are $L*\cos(\alpha)$ and $L*\sin(\alpha)$, respectively. The smart device can determine the position coordinates ($L*\cos(\alpha)$, $L*\sin(\alpha)$) of the obstacle and record the obstacle presence probability in this position as 1. If no obstacle exists in the environment, the infrared light emitted by the infrared sensor will not be reflected back. Therefore, no obstacle is present within a preset distance in the emission direction of the infrared light (the preset distance may be preset by a technician and stored in the smart device, and the obstacle should be set within the preset distance since the infrared light is reflected at a certain distance). The presence probability of obstacle in a position where an obstacle is absent can be recorded as 0. The presence probability of obstacle in an unknown grid in the grid map is then updated. A grid with a presence probability of obstacle of 1 is labeled as an occupied grid. A grid with a presence probability of obstacle of 0 is labeled as an unoccupied grid. In this way, the occupied grids, the unoccupied grids, and the unknown grids are present in the established grid map.

The smart device can determine a border between an unknown grid and an unoccupied grid in the established grid map, and determine a center position point in the unoccupied grid which is adjacent to this border as a frontier included in the established grid map.

According to the invention, before at least one frontier included in the currently established grid map is determined, preprocessing is performed (e.g., expansion) on the currently established grid map, wherein the expansion refers to labeling an unoccupied grid to which some frontiers belong as an unknown grid. In this way, if there is an obstacle adjacent to the unknown grid, the frontier is determined in the preprocessed grid map, and the determined frontier may be relatively far from the unknown grid. Therefore, even if there is an obstacle at a position of an unknown grid, the smart device may not hit the obstacle after moving to the front-edge position, thereby reducing the possibility of damaging the obstacle and the smart device.

Optionally, whether or not at least one frontier in the established grid map is determined may be judged on the basis of a pose uncertainty of the current position point. The corresponding processing in step 201 may be as follows:

during the mobile detection process for establishing a grid map for a target region, if the pose uncertainty of the current position point is less than a first preset threshold, at least one frontier included in the currently established grid map is determined; if the pose uncertainty of the current position point is greater than or equal to the first preset threshold, the position information of each grid in the currently established grid map is corrected based on closed-loop detection; and upon completion of the correction, at least one frontier included in the currently established grid map is determined.

The first preset threshold (e.g., 0.3) may be preset by a technician, and stored in the smart device.

In practice, each time the smart device moves to a position point, the pose uncertainty of the current position point may be determined (the method for determining the pose uncertainty of the current position point is described in detail hereinafter). The smart device may then judge whether the pose uncertainty of the current position point is less than the first preset threshold. If the pose uncertainty of the current position point is less than the first preset threshold, the smart device may determine the border between the unknown grid and the unoccupied grid in the established grid map, and determine the center position point in the unoccupied grid adjacent to this border as the frontier included in the established map. If the pose uncertainty of the current position point is greater than or equal to the first preset threshold, the smart device may perform closed-loop detection (the method of closed-loop detection will be described in detail hereinafter). The position information of a topological node is optimized gradually by using universal optimization tools, such as general graph optimization (G2O), Ceres Solver, or the like, such that the position information of the topological node that has been passed is more accurate. The position information of each grid in the grid map is then corrected according to the corrected position information of the topological node that has been passed. After the position information of each grid is corrected, the border between the unknown grid and the unoccupied grid is determined in the established grid map, and the center position point in the unoccupied grid adjacent to this border is determined as the frontier included in the established map.

Optionally, there are many definitions for topological nodes. Three possible definitions are provided as follows:

The topological nodes determined in the mobile detection process are a position point where the mobile detection process starts, and a position point on a moving trajectory with a grid distance to the previous topological node equal to a preset value; or the topological nodes determined in the mobile detection process are a position point where the mobile detection process starts and a position point among position points with a shortest grid distance to a previous topological node, wherein an obstacle exists on a line connecting the respective position points to the previous topological node; or the topological nodes determined in the mobile detection process are a position point where the mobile detection process starts, a position point on a moving trajectory with a grid distance to a previous topological node equal to a preset value, and a position point among position points with a shortest grid distance to a previous topological node, wherein an obstacle exists on a line connecting the respective position points to the previous topological node.

The preset value (e.g., 1 meter or 2 meter) may be set by a technician and stored in the smart device. The grid distance is the shortest distance between two topological nodes, i.e., the length of a line segment connecting the two topological nodes. For example, a grid distance between a third topological node and a fifth topological node is the length of a line segment connecting the third topological node and the fifth topological node.

In practice, during the mobile detection process of the smart device, a position point where the mobile detection process starts is determined as a first topological node (that is, the previously described position point at which the user places the smart device in the region). Starting from the first topological node, each time the smart device moves by a preset value, a position point to which the smart device moves is determined as a topological node.

Alternatively, during the mobile detection process of the smart device, a position point where the mobile detection process starts is determined as the first topological node. When the smart device moves to a certain position point (which may be referred as the current position point), if the grid distance between the current position point and the previously determined topological node has not reached a preset value, but there is an obstacle on a line connecting the current position point and the previously determined topological node, the current position point is determined as a topological node.

Alternatively, during the mobile detection process, the position point where the mobile detection process starts is determined as the first topological node. Starting from the first topological node, each time the smart device moves by a preset value, a topological node is determined. When the smart device moves to a certain position point (which may be referred as the current position point), if a topological distance between the current position point and the previously determined topological node has not reached a preset value, but there is an obstacle on a line connecting the current position point and the previously determined topological node, the current position point is determined as a topological node.

Optionally, the method of determining the pose uncertainty of the current position point can be as follows: for each position point, the pose uncertainty may further be determined using the following formula: $\Delta = k*(1/f)$; wherein k is a preset coefficient (e.g., 0.15) which may be set by a technician and stored in the smart device; f represents an overlap ratio of the obstacle information of the current position point and the obstacle information of the previous position point, that is, f represents an overlap ratio of position coordinates of each obstacle detected at the current position point and position coordinates of each obstacle detected at the previous position point; for example, if 60% of the position coordinates of the obstacle detected at the current position point overlaps with the position coordinates of the obstacle detected at the previous position point, f is 60%; and the pose uncertainty at the current position point is calculated as $\Delta = k*(1/f)=0.25$.

The method of determining the obstacle information of the current position point may be as follows: the position point where the mobile detection process starts is generally set as a first position point, and position coordinates of the first position point are set as (0, 0); the pose information is set as a moving direction: the pose uncertainty is 0; a rectangular coordinate system is established by setting the first position point as a coordinate origin and taking the movement direction as a positive direction of the horizontal axis. The distance sensor in the smart device may detect the obstacle information corresponding to the first position point. The obstacle information comprises: a distance between the obstacle and the first position point, position coordinates of the obstacle, or the like. The smart device can calculate the distance between the first position point and each obstacle by using the method as described above, then calculate the position coordinates of each obstacle according to the distance between the obstacle and the first position point and an included angle between an emission direction of the infrared light and the positive direction of the horizontal axis, and store the distance between the first position point and each obstacle and the position coordinates of each obstacle as the obstacle information of the first position point. When a second position point is determined, the smart device may determine a distance between the second position point and an obstacle according to the method of detecting the obstacle information of the first position point, and then calculate position coordinates of the second position point according to the position coordinates of the first position point, the obstacle information of the first position point and the distance between the second position point and the obstacle. For example, if there is a first obstacle in the positive direction of the horizontal axis and there is a second obstacle in the positive direction of the vertical axis, it is detected at the first position point that the first position point is 3 meters away from the first obstacle and 4 meters away from the second obstacle, and it is detected at the second position point that the second position point is 2 meters away from the first obstacle and 4 meters away from the second obstacle. The position coordinates of the second position point may be determined as (1, 0) according to the position coordinates (0, 0) of the first position point. After the position coordinates of the second position point are determined, position coordinates of respective obstacles may further be determined according to an included angle between the emission direction of the infrared light and the positive direction of the horizontal axis, and the distance between the second position point and the detected obstacle. Similarly, the obstacle information of each position point can be determined.

It should be noted that the above content only provides a method of determining the pose uncertainty. Any other method of determining a pose uncertainty of a position point may be applied in the embodiment of the present disclosure, which is not limited in the embodiment of the present disclosure.

In step 202, a target frontier satisfying a preset detection condition is determined from the at least one frontier based on the position information of at least one frontier.

The preset detection condition may be preset by a technician and stored in the smart device. The preset detection condition may be, for example, a frontier having a shortest navigation path to the current position point. The navigation path refers to a path that will be passed from the current position point to the target frontier.

In practice, after determining the at least one frontier, the smart device may acquire position information of the at least one frontier. The position information may be position coordinates. Then, the target frontier satisfying the preset detection condition is determined from the frontiers determined in step 201.

Optionally, as illustrated in FIG. 4, when the target frontier is selected, candidate frontiers may be selected from a frontier region composed of frontiers, and a target frontier is then determined from the candidate frontiers. The processing flow of the corresponding step 202 may be as follows.

In step 2021, at least one frontier region is determined based on the position information of at least one frontier.

The preset value may be preset by a technician and stored in the smart device. The preset value may be the quantity of grids (e.g., 6 grids) or the like.

In practice, the smart device may acquire the position information of at least one frontier. The position information may be position coordinates. The position coordinates of any two frontiers are substituted into a distance calculation formula (

$$d = \sqrt{\left(x_1 - x_2\right)^2 + \left(y_1 - y_2\right)^2}$$

, wherein $(x_1, y_1)$ and $(x_2, y_2)$ represent the position coordinates of two frontiers) to calculate a distance between any two frontiers. Then, the frontiers which are closer to each other form a frontier region. Specifically, the frontiers which are spaced from each other by a distance less than or equal to a preset value are classified into one frontier region. That is, the distance between any two frontiers belonging to different frontiers is greater than the preset value. As illustrated in FIG. 5, the frontiers circled by dotted lines in FIG. 5 may form a frontier region.

Optionally, when the frontier region is determined, it is possible to adopt the following manner: for any frontier included in each frontier region, there is at least one frontier adjacent thereto. As illustrated in FIG. 6, the frontiers circled by dotted lines in FIG.6 may form a frontier region.

In step 2022, a candidate frontier is selected from the frontiers included in each frontier region.

In practice, after determining the frontier region, the smart device may select a candidate frontier from the frontiers included in each frontier region. In this way, a plurality of candidate frontiers may be obtained in the same quantity as that of the frontier regions. For example, if there are three frontier regions determined by the smart device, three candidate frontiers may be selected.

Optionally, the frontier in the center position may be selected as the candidate frontier. The corresponding processing may be as follows: in the frontiers included in each frontier region, the frontier in the center position is determined as the candidate frontier corresponding to each frontier region.

In practice, for any of the determined frontier regions, the smart device may determine the frontier in the center position in the frontier region, and then determine the frontier in the center position as the candidate frontier corresponding to the frontier region.

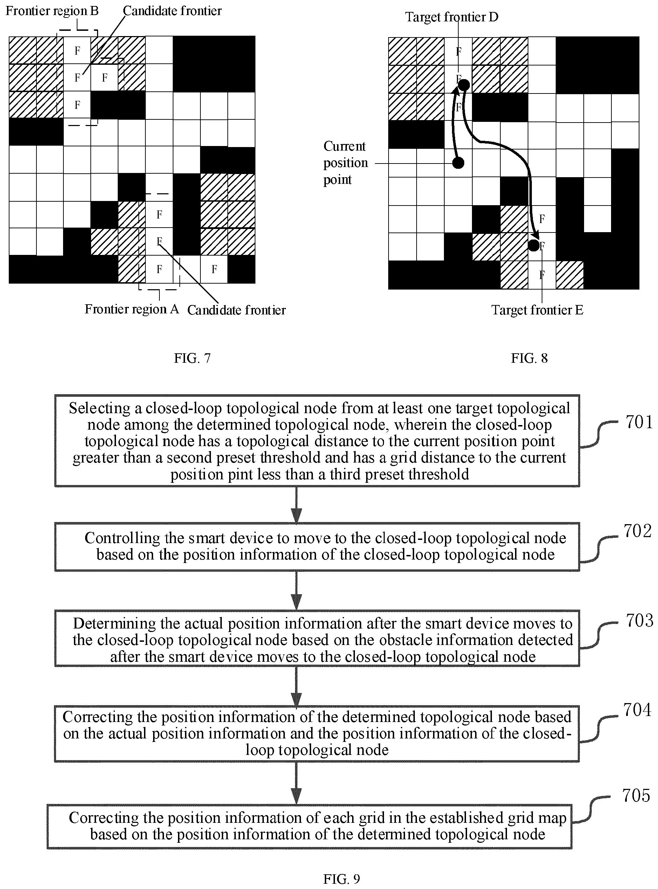

It should be noted that, since the respective frontier regions are different in shape, the quantity of grids in the center position may not be one. Then, the quantity of front-point points in the center position may be one or two. For example, as illustrated in FIG. 7, if there is one grid in the center position in the frontier region A, one frontier is located in the center position, and can be determined as the candidate frontier. However, in the frontier region B, if there are two grids in the center position, two frontiers are located in the center position. The smart device may arbitrarily select one of the two determined frontiers as the candidate frontier.

In step 2023, a target frontier satisfying a preset detection condition is selected from the at least one selected candidate frontier.

In practice, after selecting the candidate frontiers, the smart device may determine the target frontier satisfying the preset detection condition from the candidate frontiers.

Optionally, in step 2023, there are many methods for determining the target frontier satisfying the preset detection condition from the candidate frontiers. The following three possible methods are provided below.

In the first method, the quantity of frontiers included in each frontier region is determined; and a frontier region with greatest quantity of frontier is determined, and candidate frontiers corresponding to the frontier region is determined as a target frontier.

In practice, the smart device may determine the quantity of frontiers included in each frontier region, then determine the frontier region having the maximum quantity of frontiers, and determine the candidate frontier corresponding to this frontier region as the target frontier.

In this way, as the frontier is located at a center point of a grid which is unoccupied and is adjacent to a border between the unoccupied grid and an unknown grid in the grid map, it is possible for the smart device to detect the presence probability of obstacle in more unknown grids at one time after moving to the frontier region having more frontiers. Therefore, the time for establishing the grid map may be shortened.

In the second method, respective navigation path length from the current position point to respective candidate frontiers is determined; and the candidate frontier corresponding to the minimum navigation path length is determined as a target frontier.

In practice, the smart device may input the position information of the current position point as position information of a starting position, and the position information of each candidate frontier as position information of an ending position into a navigation algorithm (the navigation algorithm may be any one of the related art algorithms). The smart device may determine the respective navigation path length from the current position point to the respective candidate frontier. The candidate frontier corresponding to the minimum navigation path length is then determined as the target frontier.

In this way, since the less the navigation path length, the shorter the time required to move to the target frontier, the travelling time of the smart device can be saved.

In the third method, the quantity of frontiers included in each frontier region, and the navigation path length from the current position point to each candidate frontier are determined; a weighting operation is performed according to a preset weighting coefficient of the navigation path length and a preset weighting coefficient of the quantity of frontiers, as well as the navigation path length corresponding to each candidate frontier and the quantity of frontiers included in the frontier region to which the candidate frontier belongs to determine a weighted value corresponding to each candidate frontier; and the candidate frontier corresponding to the maximum weighted value is determined as the target frontier.

The preset weighting coefficient of the navigation path length and the preset weighting coefficient of the quantity of frontiers may be preset by a technician

and stored in the smart device. The sum of the preset weighting coefficient of the navigation path length and the preset weighting coefficient of the quantity of frontiers is 1 (in general cases, the preset weighting coefficient of the quantity of frontiers is greater than the preset weighting coefficient of the navigation path length). For example, when the preset weighting coefficient of the navigation path length is 0.4, the preset weighting coefficient of the quantity of frontiers is 0.6 or the like.

In practice, the smart device can determine the quantity of frontiers included in each frontier region, and input the position information of the current position point as position information of a starting position, and the position information of each candidate frontier as position information of an ending position into a navigation algorithm. The smart device can determine the navigation path length from the current position point to respective candidate frontiers. For each candidate frontier, the smart device can calculate a weighted value corresponding to respective candidate frontier by using the following formula: $s = a^*x + b^*y$, wherein a is the preset weighting coefficient of the navigation path length, b is the preset weighting coefficient of the quantity of frontiers, $x$ is the navigation path length corresponding to the candidate frontier, and y is the quantity of frontiers included in the frontier region to which the candidate frontier belongs.

The smart device may calculate a weighted value s corresponding to each candidate frontier, and then determine the candidate frontier with the maximum weighted value s as the target frontier.

In this way, since both the quantity of frontiers included in each frontier region and the navigation path length are considered, the determined target frontier may be made more accurate, and the obstacle presence probability in more unknown grids may be determined at one time.

It should be noted that, in the above three methods, if a plurality of target frontiers is determined, any one of the target frontiers may be selected as the final target frontier. For example, in the first method, if the maximum value of the quantity of frontiers included in the frontier region is 20, the quantity of frontiers included in each of two frontier regions is 20. All of candidate frontiers corresponding to the two frontier regions may be determined as the target frontiers. Any target frontier is then selected from the two target frontiers as the final target frontier.

In step 203, the smart device is controlled to move to the target frontier, and a presence probability of obstacle in an unknown grid included in the grid map is detected.

In practice, upon determining the target frontier, the smart device may input the position information of the current position point as the position information of the starting position, and the position information of the target frontier as the position information of the ending position into a navigation algorithm. The smart device may determine a navigation path from the current position point to the target frontier.

The smart device may control itself to move to the target frontier along the determined navigation path, and then control the distance sensor to detect the presence probability of obstacle in the unknown grid included in the established grid map.

Specifically, the method for determining the presence probability of obstacle in the unknown grid may be as follows.

Description is given herein by taking the scenario where the distance sensor is an infrared sensor as an example. The infrared sensor my emit infrared light outwards at 360 degrees, and record a time point of emission, and an included angle between an emission direction of the infrared light and a positive direction of a horizontal axis (see the horizontal axis in the rectangular coordinate system established in step 201). If there is an obstacle in the environment, the obstacle may reflect the infrared light back. The distance sensor receives the infrared light reflected by the obstacle and records a reception time point of receiving the reflected infrared light. A distance between the obstacle and the target frontier is calculated by using a formula $L=T*V/2$, wherein L may represent the distance between the obstacle and the target frontier, V is a light velocity which is $3*10^8$ m/s, and T is a time difference between receiving the infrared light and emitting the infrared light. In this way, the distance between the target frontier and each obstacle may be calculated. If no obstacle is present in the environment, the infrared light emitted by the infrared sensor may not be reflected back. Therefore, there is no obstacle within a preset distance in the emission direction of the infrared light (the preset distance may be preset by a technician and stored in the smart device, and the obstacle should be set within the preset distance since the infrared light is reflected at a certain distance). The presence probability of obstacle in a position where an obstacle is absent may be recorded as 0, which may be correspondingly stored to the unknown grid directly in specific storage.

The position coordinates of the current target frontier are then determined according to position information of an obstacle detected at the previous target frontier, position coordinates of the previous target frontier, and obstacle information detected at the current target frontier. For example, if there is a first obstacle in the positive direction of the horizontal axis and there is a second obstacle in the positive direction of the vertical axis, it is detected in a first position point (the previous target frontier) that the first position point is 1 meter away from the first obstacle and 1 meter away from the second obstacle, and it is detected in a second position point (the current target frontier) that the second position point is 4 meters away from the first obstacle and 4 meters away from the second obstacle. The position coordinates of the second position point may be determined as (4, 4) according to the position coordinates (1, 1) of the first position point. Then, since the infrared sensor records the emission direction of the emitted infrared light, the smart device may determine the position coordinates of the obstacles. If an included angle between the emission direction and the horizontal axis is $\alpha$, the horizontal coordinate is $L*\cos(\alpha)$, and the vertical coordinate is $L*\sin(\alpha)$, the position coordinates of the obstacle are $(L*\cos(\alpha), L*\sin(\alpha))$. The smart device may determine the position coordinates of the obstacle, record the presence probability of obstacle in the position coordinates as 1, and then correspond the position coordinates to an unknown grid (since the grid is a small square of 5cm*5cm, the position information of each unknown grid may be calculated). In this way, the presence probability of obstacle in the unknown grid included in the established grid map may be determined.

In addition, the position coordinates of the current target frontier may further be directly acquired from the recorded position information of the respective frontiers.

Upon determining the presence probability of obstacle in the unknown grid included in the established grid map, the smart device may call a map update program in the device. Then, the presence probability of obstacle in the unknown grid, the position information of the unknown grid and the established grid map are used as the inputs of the map update program, and the output of the map update program is the updated established grid map which comprises the presence probability of obstacle in the unknown grid determined by the smart device.

Optionally, when the executing subject is the control terminal of the smart device, the smart device can send the detected presence probability of obstacle to the control terminal in which the map update program is provided. The control terminal may call the map update program in the device. Then, the presence probability of obstacle in the unknown grid, the position information of the unknown grid and the established grid map are used as the inputs of the map update program, and the output of the map update program is the updated established grid map which comprises the presence probability of obstacle in the unknown grid determined by the smart device.

Optionally, an embodiment of the present disclosure further provides a method of determining an obstacle presence probability in more unknown grids. The corresponding processing may be as follows:

updating the map with the detected presence probability of obstacle in the unknown position; and proceeding to the process of determining at least one frontier comprised in the currently established map if the updated map further comprises unknown positions.

In practice, a description is given by taking the scenario where an unknown position is an unknown grid as an example. Upon updating the map with the determined presence probability of obstacle in the unknown grid, the smart device may determine whether the updated map further comprises an unknown grid. If the updated map does not comprise an unknown grid, it indicates that the establishment of the grid map for the target region is completed, thereby ending the establishment of the grid map. If the updated map comprises an unknown grid, the smart device may return to perform steps 201 through 203. In this way, the smart device may determine the presence probability of obstacle in all unknown grids in the grid map.

For example, as illustrated in FIG. 8, the smart device determines a target frontier E after moving from a current position point O to a target frontier D and updating the established grid map, and then ends the establishment of the grid map for the target region after moving to the target frontier E and updating the established grid map if the established grid map does not comprise an unknown grid.

As illustrated in FIG. 9, an embodiment of the present disclosure further provides a method of correcting position information of each grid in a grid map based on closed-loop detection. The executing steps of the method may be as follows.

In step 701, a closed-loop topological node is selected from at least one target topological node among the determined topological node, wherein the closed-loop topological node has a topological distance to the current position point greater than a second preset threshold and has a grid distance to the current position pint less than a third preset threshold.

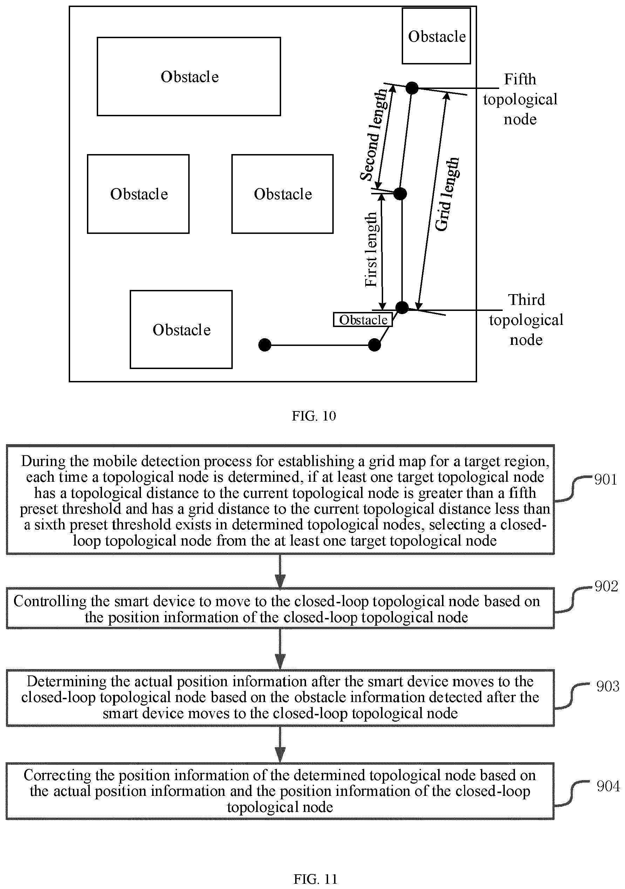

The second preset threshold and the third preset threshold may be preset by a technician and stored in the smart device. The second preset threshold is generally greater than the third preset threshold, for example, the second preset threshold is 10 meters, and the third preset threshold is 0.8 meter, or the like. As illustrated in FIG. 10, the topological distance is a length of a line connecting topological nodes passed by the smart device. For example, a topological distance between a third topological node and a fifth topological node is the sum of a first length and a second length, wherein the first length is a length of a line connecting the third topological node and a fourth topological node, and the second length is a length of a line connecting the fourth topological node and the fifth topological node. The grid distance is the shortest distance between two topological nodes. For example, the grid distance between the third topological node and the fifth topological node is a length of a line segment connecting the third topological node and the fifth topological node.

In practice, if the pose uncertainty of the current position point is greater than or equal to a first preset threshold, the smart device can determine a topological distance between the current position point and respective determined topological nodes (wherein, a topological distance between the current position point and the previous topological node is a length of a line connecting the current position point and the previous topological node, and a topological distance between the current position point and the previous two topological nodes is the sum of a first length and a second length, wherein the first length is a length of a line connecting the current position point and the previous topological node, and the second length is a length of a line connecting the previous topological node and a topological node which is previous to the previous topological node), and then determine a length of a line connecting the current position point and respective determined topological nodes (i.e., the grid distance). It is determined whether a topological node among the respective topological nodes has a topological distance to the current position point greater than a second preset threshold, and has grid distance to the current position point less than a third preset threshold, if there is at least one topological node which satisfies the conditions mentioned above (such topological nodes are referred to as target topological nodes hereinafter), then a closed-loop topological node can be selected from the at least one target topological node.

Optionally, when the closed-loop topological node is selected from the at least one target topological node, the pose uncertainty of the current position point is further considered. The corresponding processing can be as follows:

If at least one target topological node among the determined respective topological nodes has a topological distance to the current position point is greater than the second preset threshold and has a grid distance to the current position point less than the third preset threshold, and the pose uncertainty of the current position point is greater than a fourth preset threshold, a closed-loop topological node is selected from at least one target topological node.

The fourth preset threshold (e.g., 0.5) may be preset by a technician, and stored in the smart device. The fourth preset threshold is greater than the first preset threshold.

In practice, if the pose uncertainty of the current position point is greater than or equal to the first preset threshold, the smart device can determine, from the determined topological nodes, whether a topological node has a topological distance to the current position point greater than the second preset threshold, and has a grid distance to the current position point is less than the third preset threshold (the determining method has been described above and will not be elaborated here). If at least one topological node satisfying the above conditions exists (such topological nodes may be subsequently referred to as target topological nodes), the smart device may judge whether the pose uncertainty of the current position point is greater than the fourth preset threshold, and if the pose uncertainty of the current position point is further greater than the third preset threshold, the smart terminal may select a closed-loop topological node from at least one target topological node. If the pose uncertainty of the current position point is less than or equal to the fourth preset threshold, no closed-loop topological node will be selected from at least one target topological node, and the mobile detection will continue. This is because the pose uncertainty of the current position point is not great enough, which indicates that the position information of the current position point and the position information of the determined topological node are relatively accurate. Therefore, the position information of the determined topological nodes is not required to be corrected, and thus closed-loop detection is not required.

Optionally, if the pose uncertainty of the current position point is greater than or equal to the first preset threshold, but no target topological node mentioned above exists, it can be determined that there is at least one frontier included in the currently established grid map.

If only one target topological node exists, this target topological node may be selected as a closed-loop topological node. If there are a plurality of target topological nodes, a closed-loop topological node can be selected according to the following methods.

In the first method, a target topological node corresponding to the minimum navigation path length can be selected as a closed-loop topological node. The corresponding processing may be as follows:

A navigation path length from the current position point to respective target topological nodes is determined; and a target topological node corresponding to the minimum navigation path length is selected from the at least one target topological node as a closed-loop topological node.

The navigation path length refers to an actual distance from the current position point to the target topological node during a movement.

In practice, after the smart device determines a plurality of target topological nodes, for each target topological node, a navigation path from the current position point to respective target topological nodes can be obtained by inputting the position information of the current position point and the position information of the target topological node to a navigation algorithm, and a navigation path length is determined. A target topological node corresponding to the minimum navigation path length is then selected from at least one target topological node as a closed-loop topological node. In this way, the target topological node with the minimum navigation path length is closest to the current position point, thereby saving the navigation path cost.

In the second method, a target topological node with the minimum pose uncertainty is selected as a closed-loop topological node from at least one target topological node.

In practice, the smart device can acquire the stored pose uncertainty of respective target topological nodes, and select a target topological node with the minimum pose uncertainty as a closed-loop topological node. Since the ultimate goal of closed-loop detection is to correct the position information of respective topological nodes and make the pose uncertainty of each topological node as small as possible, the target topological node with the smallest pose uncertainty is selected as the closed-loop topological node, thereby increasing the correction speed.

In the third method, a closed-loop topological node may be selected by simultaneous consideration of the pose uncertainty and the navigation path length of the target topological node. The corresponding processing may be as follows:

A navigation path length from the current position point to respective target topological nodes is determined; a weighting operation is performed according to a preset weighting coefficient of the pose uncertainty and a preset weighting coefficient of the navigation path length, as well as the navigation path length and the pose uncertainty corresponding to respective target topological nodes to determine a weighted value corresponding to respective target topological nodes; and a target topological node with the minimum weighted value is selected as a closed-loop topological node from the at least one target topological node.

The preset weighting coefficient of the pose uncertainty and the preset weighting coefficient of the navigation path length may be preset by a technician and stored in the smart device. The sum of the preset weighting coefficient of the pose uncertainty and the preset weighting coefficient of the navigation path length is 1. For example, the preset weighting coefficient of the pose uncertainty is 0.7 and the preset weighting coefficient of the navigation path length is 0.3, and the like.

In practice, the smart device can determine the pose uncertainty of each target topological node through the second method, and details are not given herein any further. The navigation path length from the current position point to respective target topological nodes may further be determined through the first method. The weighted value corresponding to respective target topological nodes may be calculated through the following formula: $s=a^*\Delta+b^*x$, wherein a is the preset weighting coefficient of the pose uncertainty, b is the preset weighting coefficient of the navigation path length, $\Delta$ is the pose uncertainty of the target topological node, and x is the navigation path length from the current position point to respective target topological nodes.

Upon determining the weighted value s of respective target topological nodes, the smart device can select a target topological node with the minimum weighted value s as a closed-loop topological node from at least one target topological node. In this way, since both the pose uncertainty and the navigation path cost are considered, it is possible to balance the navigation path cost and the correction speed.

Optionally, if the current position point happens to be a topological node, the processing in step 701 may be as follows:

If the current position point is determined as a topological node, and at least one target topological node among the determined topological nodes has a topological distance to the current position point is greater than the second preset threshold and has a grid distance to the current position point is less than the third preset threshold, a closed-loop topological node is selected from at least one target topological node.

In practice, if the current position point is determined as the topological node (the determination method for topological nodes has been described in detail above, and is not described herein any further), the smart device can determine that the pose uncertainty of the current position point is greater than or equal to the first preset threshold; then determine a topological distance between the current position point and respective determined topological nodes (a topological distance between the current position point and the previous topological node is a length of a line connecting the current position point and the previous topological node, and a topological distance between the current position point and the previous two topological nodes is the sum of a first length and a second length, wherein the first length is a length of a line connecting the current position point and the previous topological node, and the second length is a length of a line connecting the previous topological node and a topological node which is previous to the previous topological node); and then determine a length of a line connecting the current position point and respective determined topological nodes (i.e., the grid distance). Whether a topological node among the determined topological nodes has a topological distance to the current position point is greater than the second preset threshold and has a grid distance to the current position point is less than the third preset threshold is determined. If at least one topological node satisfies the above conditions exists (such topological nodes may be subsequently referred to as target topological nodes), a closed-loop topological node can be selected from the at least one target topological node.

Specifically, when the current position point is a topological node, the method of selecting a closed-loop topological node from at least one target topological node is same as the previous method for selecting a closed-loop topological node, and the difference therebetween is just to replace the current position point with a topological node.

In step 702, the smart device is controlled to move to the closed-loop topological node based on the position information of the closed-loop topological node.

In practice, upon selecting the closed-loop topological node, the smart device may input the stored position information of the closed-loop topological node and the stored position information of the current position point into a navigation algorithm to obtain a navigation path from the current position point to the closed-loop topological node, and then control itself to move to the closed-loop topological node according to the navigation path.

In step 703, the actual position information after the smart device moves to the closed-loop topological node is determined based on the obstacle information detected after the smart device moves to the closed-loop topological node.

In practice, since the position information of the current position point is determined based on the position information of the previous topological node, the position information of the previous topological node is accumulated to the determined position information of the current position point. Assuming that position coordinates of the closed-loop topological node are (0, 0), and position coordinates of the current position point are (20, 32), if an error occurs in the position coordinates of the current position point, a position point whose position coordinates are (0, 0) with respect to the current position point is no longer a position point whose position coordinates are (0, 0) as originally recorded by the smart device. Therefore, the actual position information after the smart device moves to the closed-loop topological node is different from the stored position information of the closed-loop topological node.

After moving to the closed-loop topological node according to the navigation path, the smart device may detect a distance between the position point and the obstacle after moving to the closed-loop topological node according to the previous method for determining the obstacle information, so as to obtain obstacle information, and thus details are not given herein any further. The position coordinates of a position point after the smart device moves to the closed-loop topological node are then calculated according to the currently stored position coordinates of the closed-loop topological node, the currently stored obstacle information of the closed-loop topological node and the obstacle information detected at the position point after the smart device moves to the closed-loop topological node (since the position of the obstacle is fixed, different position information of the same obstacle may be used to determine the position coordinates of the closed-loop topological node). That is, the actual position information after the smart device moves to the closed-loop topological node is determined.

In step 704, the position information of the determined topological node is corrected based on the actual position information and the position information of the closed-loop topological node.

In practice, after the smart device determines the actual position information after moving to the closed-loop topological node, the actual position information after the smart device moves to the closed-loop topological node and the position information of the closed-loop topological node may define a closed-loop constraint. The closed-loop constraint may be understood as a relative relationship of the actual position information after the smart device moves to the closed-loop topological node and the position information of the closed-loop topological node, for example, a horizontal coordinate difference and a vertical coordinate difference are 15, 17 or the like, respectively. The closed-loop constraint is gradually optimized by using general optimization tools such as general graph optimization (G2O), Ceres Solver or the like, such that the actual position information after the smart device moves to the closed-loop topological node is more approximate to the recorded position information of the closed-loop topological node. The position information of the determined topological node is corrected, such that the position information of the determined topological node is more accurate.

It should be noted that the method of correcting the position information of the determined topological node is same as the method of performing position correction through the closed-loop constraint in the related art. Any of the methods that may be employed to perform position correction according to the closed-loop constraint can be applied in the embodiments of the present disclosure, which is not limited in the embodiments of the present disclosure.

In step 705, the position information of each grid in the established grid map is corrected based on the position information of the determined topological node.

In practice, after the position information of the determined topological node is corrected, a coordinate origin in the established grid map corresponds to a coordinate origin in the corrected position information (that is, the coordinate origin in the established grid map coincides with the coordinate origin in the corrected position information). Then, the position information of each grid in the established grid map is updated according to the corrected position information and the position information of the obstacle. For example, position coordinates of a center point in a grid prior to correction are (0, 8), and an obstacle is located at a distance of 5 grids. After the coordinate origin in the grid map coincides with the coordinate origin in the corrected position information, previous position coordinates (0, 8) of the point are corrected to (0, 7.5). Therefore, the obstacle may move to the left by 0.5.

The position coordinates of the obstacle may change with the correction. In this way, since the corrected position information is relatively accurate, the determined position coordinates of the obstacle may be more accurate. Furthermore, the presence probability of obstacle in each grid in the grid map is further more accurate.

It should be noted that the method of updating the position information of each grid in the established grid map based on the corrected position information is the same as the method of updating the grid map in the related art. Any method that may be employed to update a grid map can be applied in the embodiments of the present disclosure.

In addition, in the embodiment of the present disclosure, each time a topological node is determined, the current position point may be connected to the previous topological node to form a topological map. After the position information of the determined topological node is corrected, the topological map can be updated with the corrected position information of the topological node to ensure the position information of each topological node in the topological map to be more accurate.

It should be noted that the embodiment of the present disclosure is described by using the scenario where the executing subject is a smart device as an example. If the executing subject is a control terminal of the smart device, the control terminal may control the smart device to move. The smart device sends the detected obstacle information to the control terminal. The control terminal may establish a map and determine the target frontiers existing in the map, and further determine the pose uncertainty of respective topological nodes and correct the grid map.

In the embodiment of the present disclosure, the smart device or the control terminal of the smart device may select a target frontier satisfying the preset detection condition from at least one frontier included in the established map, and then control the smart device to move to the target frontier. The smart device may detect the presence probability of obstacle in the unknown position included in the map, and the user does not need to control the smart device to move, thereby saving time for users.

In addition, a further embodiment of the present disclosure provides a method of correcting a position of a topological node based on closed-loop detection. The method will be described as follows.

An embodiment of the present disclosure provides a method of correcting a position of a topological node based on closed-loop detection. An executing subject of the method can be a smart device or a control terminal of the smart device. The smart device may be a device with an autonomous moving function, such as a robot, or the like. The control terminal may be configured to control the smart device to move, and may be, for example, a computer. The control terminal may be provided with a processor, a memory, a transceiver, and the like therein. The processor may be configured to correct the position of the topological node based on closed-loop detection. The memory may be configured to store data required during the closed-loop detection process, and generated data. The transceiver may be configured to receive and send messages. The terminal may further be provided with an input/output device such as a screen therein, wherein the screen may be configured to display a grid map or the like. The smart device may be provided with a processor, a memory, a transceiver, and the like therein. The processor may be configured to correct the position of the topological node based on closed-loop detection. The memory may be configured to store data required during the closed-loop detection process, and generated data. The transceiver may be configured to receive and send messages or the like. The smart device may further be provided with a distance sensor and traveling components therein. The distance sensor may be an infrared sensor, an ultrasonic sensor or the like, and configured to determine position information of the smart device. The traveling components include a forward wheel, a steering wheel, a motor and the like, and may be electrically connected to the processor and controlled by the processor. In this embodiment, the solution is described in detail using the scenario where the executing subject is the smart device as an example. Other cases are similar thereto, which are not described in detail in this embodiment.

As illustrated in FIG. 11, the processing flow of the method may include the following steps.

In step 901, during the mobile detection process for establishing a grid map for a target region, each time a topological node is determined, if at least one target topological node has a topological distance to the current topological node is greater than a fifth preset threshold and has a grid distance to the current topological distance less than a sixth preset threshold exists in determined topological nodes, a closed-loop topological node is selected from the at least one target topological node.

The fifth preset threshold and the sixth preset threshold may be preset by a technician and stored in the smart device. The fifth preset threshold is greater than the sixth preset threshold, for example, the fifth preset threshold is 10 meters, and the sixth preset threshold is 0.8 meters or the like. The topological distance is a length of a line connecting topological nodes passed by the smart device. For example, a topological distance between a third topological node and a fifth topological node is the sum of a third length and a fourth length, wherein the third length is a length of a line connecting the third topological node and a fourth topological node, and the fourth length is a length of a line connecting the fourth topological node and the fifth topological node. The grid distance is the shortest distance between two topological nodes. For example, the grid distance between the third topological node and the fifth topological node is a length of a line segment connecting the third topological node and the fifth topological node.

In practice, after the smart device enters an unfamiliar region, if a map of this unfamiliar region is not stored in the smart device, this region may be subsequently referred to as a target region. If the user wants to control the smart device to establish a grid map autonomously, the smart device may be placed at a certain position point. An autonomous grid map establishing function of the smart device is then turned on. The smart device may detect a turn-on instruction for the autonomous grid map establishing function. The smart device then starts moving from the current position point to detect obstacle information in the target region. Each time a topological node is determined, it can be determined from the determined topological nodes whether a topological node has a topological distance to the current topological node is greater than the fifth preset threshold and has a grid distance to the current topological node is less than the sixth preset threshold exists. If at least one topological node satisfies the above conditions exists, such topological nodes may be subsequently referred to as target topological nodes. A closed-loop topological node may be selected from at least one target topological node.

Optionally, the topological nodes determined during the mobile detection process can comprise: a position point where the mobile detection process starts and a position on a moving trajectory with a grid distance to a previous topological node is equal to a preset value; or a position point where the mobile detection process starts and a position point among position points with a shortest grid distance to a previous topological node, wherein an obstacle exists on a line connecting the respective position points to the previous topological node; or a position point where the mobile detection process starts, a position point on a moving trajectory with a grid distance to a previous topological node equal to a preset value, and a position point among position points with a shortest grid distance to a previous topological node, wherein an obstacle exists on a line connecting the respective position points to the previous topological node.

The preset value (e.g., 1 m or 2 m) may be set by a technician and stored in the smart device.

In practice, during the mobile detection process, a position point where the mobile detection process starts is determined as a first topological node. Starting from the first topological node, one topological node is determined upon moving by a preset value.

Alternatively, during the mobile detection process, a position point where the mobile detection process starts is determined as the first topological node. When moving to a certain position point (which may be referred to as a current position point), if a topological distance between the current position point and the previous topological node has not reached a preset value, but an obstacle exists on a line connecting the current position point and the previous topological node, the current position point is determined as a topological node.

Alternatively, during the mobile detection process, a position point where the mobile detection process starts is determined as the first topological node. Starting from the first topological node, one topological node is determined upon moving by a preset value. When moving to a certain position point (which may be referred as a current position point), if a topological distance between the current position point and the previous topological node has not reached a preset value, but an obstacle exists on a connection line connecting the current position point and the previous topological node, the current position point is determined as a topological node.

Optionally, when selecting a closed-loop topological node from at least one target topological node, the pose uncertainty of the current position point is further considered. The corresponding processing may be as follows:

If at least one target topological node among the determined topological nodes has a topological distance to the current topological node greater than the fifth preset threshold and has a grid distance to the current topological distance less than the sixth preset threshold, and a pose uncertainty of the current topological node is greater than a seventh preset threshold, a closed-loop topological node is determined from the at least one target topological node.

The seventh preset threshold (e.g., 0.5) may be preset by a technician, and stored in the smart device.

In practice, each time a topological node is determined, it is determined whether at least one topological node among the determined topological nodes has a topological distance to the current topological node greater than the fifth preset threshold and has a grid distance to the current topological node less than the sixth preset threshold. If at least one topological node satisfies the above conditions, such topological nodes may be subsequently referred to as target topological nodes. Whether the pose uncertainty of the current topological node is greater than the seventh preset threshold is then judged. If the pose uncertainty of the current topological node is greater than the seventh preset threshold, a closed-loop topological node is selected from at least one target topological node. If the pose uncertainty of the current topological node is less than or equal to the seventh preset threshold, no closed-loop topological node will be selected from the at least one target topological node, and the mobile detection is continued. Therefore, the pose uncertainty of the current topological node is not great enough, which indicates that the position information of the current topological node is still relatively accurate. Therefore, the position information of the determined topological node is not required to be corrected, and thus closed-loop detection is not required.

If only one target topological node is determined, this target topological node can be selected as a closed-loop topological node. If a plurality of target topological nodes are determined, a closed-loop topological node may be selected according to the following methods.

In the first method, a target topological node corresponding to the minimum navigation path length can be selected as a closed-loop topological node. The corresponding processing may be as follows:

A navigation path length from the current topological node to respective target topological nodes is determined; and a target topological node corresponding to the minimum navigation path length is selected as a closed-loop topological node from the at least one target topological node.

The navigation path length refers to an actual distance during moving from the current topological node to the target topological node.

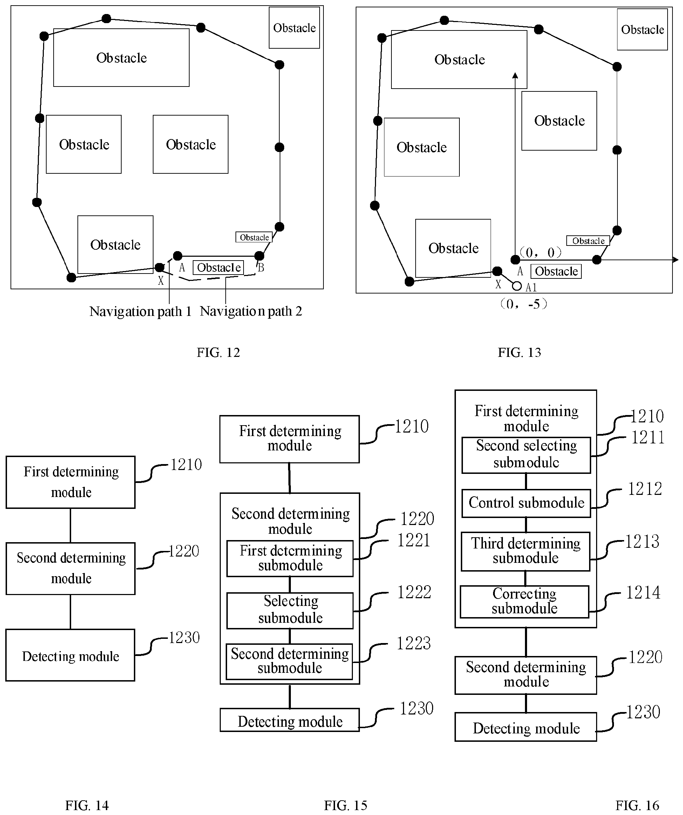

In practice, after the smart device determines a plurality of target topological nodes, a navigation path from the current topological node to respective target topological nodes may be obtained by inputting the position information of the current topological node and the position information of the target topological node to a navigation algorithm, and a navigation path length is determined. A target topological node corresponding to the minimum navigation path length is then selected as a closed-loop topological node from at least one target topological node. In this way, the target topological node with the minimum navigation path length is closest to the current topological node, thereby saving the navigation path cost. For example, as illustrated in FIG. 12, the current topological node is a point X, and there are two target topological nodes A and B. A navigation path from point X to point A is a navigation path 1 in FIG. 12, and a navigation path from point X to point B is a navigation path 2 in FIG. 12. The length of the navigation path 1 is less than that of the navigation path 2. The closed-loop topological node is a target topological node corresponding to the navigation path 1.

In the second method, a target topological node with the minimum pose uncertainty is selected as a closed-loop topological node from at least one target topological node.

In practice, the smart device may acquire the stored pose uncertainty of each target topological node, and select a target topological node with the minimum pose uncertainty as a closed-loop topological node. Since the ultimate goal of closed-loop detection is to correct the position information of each topological node and make the pose uncertainty of each topological node as small as possible, the target topological node with the minimum pose uncertainty is selected as the closed-loop topological node, thereby increasing the correction speed.

The method for determining the pose uncertainty of the topological node by the smart device may be as follows:

Each time the smart device determines a topological node, the pose uncertainty of the topological node can be determined. The position point where the mobile detection process starts is generally defined as a first topological node, and position coordinates of the first topological node are defined as (0, 0). The pose information is set to a direction to travel. The pose uncertainty is 0. A rectangular coordinate system is established by taking the first topological node as a coordinate origin and the movement direction as a positive direction of the horizontal axis. The distance sensor in the smart device can detect the obstacle information corresponding to the first topological node. The obstacle information comprises: a distance between the obstacle and the topological point, position coordinates of the obstacle, or the like. The embodiment of the present disclosure is described by taking an infrared sensor as an example. The distance sensor in the smart device may emit infrared light outwards at 360 degrees, and record a time point of emission, and an included angle between an emission direction of the infrared light and the positive direction of the horizontal axis. If an obstacle is present in the environment, the obstacle will reflect the infrared light back. The distance sensor receives the reflected infrared light and records a reception time point of the reflected infrared light. A distance between the obstacle and the first topological point is then calculated by using a formula $L=T^*V/2$, wherein L represents the distance between the obstacle and the first topological node, V is the light velocity which is $3*10^8$ m/s, and T is a time difference between receiving the infrared light and emitting the infrared light. In this way, the distance between the first topological node and each obstacle can be calculated to obtain the obstacle information of the first topological node. The horizontal coordinate and the vertical coordinate of the position where the obstacle is located are determined as L*cos($\alpha$) and L*sin($\alpha$) respectively according to the distance between the obstacle and the first topological node, an included angle between the emission direction of the infrared light and the horizontal axis, and an included angle $\alpha$ between the emission direction and the horizontal axis. In this way, the position coordinates of each obstacle may be calculated as (L*cos($\alpha$), L*sin($\alpha$)). The position coordinates of each obstacle may further be stored as obstacle information of the first topological node. When a second topological node is determined, the distance between the second topological node and the obstacle is determined according to the method of detecting the obstacle information of the first topological node. Position coordinates of the second topological node are then calculated according to the position coordinates of the first topological node, the obstacle information of the first topological node, and a distance between the second topological node and the obstacle. In addition, if no obstacle exists in the environment, the infrared light emitted by the infrared sensor may not be reflected back. Therefore, there is no obstacle within a preset distance in the emission direction of the infrared light (the preset distance may be preset by a technician and stored in the smart device, and the obstacle should be set within the preset distance since the infrared light is reflected at a certain distance).

For example, if a third obstacle is present in the positive direction of the horizontal axis and a fourth obstacle is present in the positive direction of the vertical axis, it is detected in the first topological node that the first topological node is 3 meters away from the third obstacle and 4 meters away from the fourth obstacle, and it is detected in the second topological node that the second topological node is 2 meters away from the third obstacle and 4 meters away from the fourth obstacle. The position coordinates of the second topological node may be determined as (1, 0) according to the position coordinates (0, 0) of the first topological node. After the position coordinates of the second topological node are determined, position coordinates of respective obstacles may further be determined according to an included angle between the emission direction of the infrared light and the positive direction of the horizontal axis, and the distance between the second topological node and the detected obstacle. By analogy, the obstacle information of each topological node may be determined. $\Delta = k^*(1/f)$, wherein k is a preset coefficient (e.g., 0.15) which may be set by a technician and stored in the smart device; f represents an overlap ratio of the obstacle information of the current topological node and the obstacle information of the previous topological node, that is, f represents an overlap ratio of position coordinates of each obstacle detected at the current topological node and position coordinates of each obstacle at the previous topological node; for example, if 60% of the position coordinates of the obstacle detected at the current topological node overlaps with the position coordinates of the obstacle at the previous topological node, f is 60%; and the pose uncertainty in the current topological node is calculated as $\Delta = k^*(1/f)$ = 0.25.

It should be noted that the above content only provides a method for determining the pose uncertainty. Any method for determining a pose uncertainty of a topological node may be used in the embodiment of the present disclosure, which is not limited in the embodiment of the present disclosure.

In the third method, a closed-loop topological node may be selected by consideration of both the pose uncertainty of the target topological node and the navigation path length. The corresponding processing may be as follows:

A navigation path length from the current topological node to respective target topological nodes is determined; a weighting operation is performed according to a preset weighting coefficient of the pose uncertainty and a preset weighting coefficient of the navigation path length, as well as the navigation path length and the pose uncertainty corresponding to respective target topological nodes to determine a weighted value corresponding to each target topological node; and a target topological node with the minimum weighted value is selected as a closed-loop topological node from the at least one target topological node.

The preset weighting coefficient of the pose uncertainty and the preset weighting coefficient of the navigation path length may be preset by a technician and stored in the smart device. The sum of the preset weighting coefficient of the pose uncertainty and the preset weighting coefficient of the navigation path length is 1. For example, when the preset weighting coefficient of the pose uncertainty is 0.7, the preset weighting coefficient of the navigation path length is 0.3.

In practice, the smart device may determine the pose uncertainty of respective target topological nodes through the second method, and details are not described herein again. The navigation path length from the current topological node to each target topological node may further be determined by using the first method. The weighted value corresponding to respective target topological nodes may be calculated by using the following formula: $s = \alpha^*\Delta + b^*x$, wherein a is the preset weighting coefficient of the pose uncertainty, b is the preset weighting coefficient of the navigation path length, $\Delta$ is the pose uncertainty of the target topological node, and x is the navigation path length from the current topological node to each target topological node.

After determining the weighted value of each target topological node, the smart device can select the target topological node with the minimum weighted value as a closed-loop topological node from at least one target topological node.

In step 902, the smart device is controlled to move to the closed-loop topological node based on the position information of the closed-loop topological node.

In practice, after the closed-loop topological node is selected, the stored position information of the closed-loop topological node and the stored position information of the current topological node may be input into a navigation algorithm so as to obtain a navigation path from the current topological node to the closed-loop topological node, and the smart device is then controlled to move to the closed-loop topological node according to the navigation path.

In step 903, the actual position information after the smart device moves to the closed-loop topological node is determined based on the obstacle information detected after the smart device moves to the closed-loop topological node.

In practice, since the position information of the current topological node is determined based on the position information of the previous topological node, the position information of the current determined topological node accumulates the position information of the previous topological node. Assuming that position coordinates of the closed-loop topological node are (0, 0), and position coordinates of the current topological node are (20, 32), if there is an error in the position coordinates of the current topological node, a position point whose position coordinates are (0, 0) with respect to the current position point is no longer a position point whose position coordinates are (0, 0) as originally recorded by the smart device. Therefore, the actual position information after the smart device moves to the closed-loop topological node is different from the stored position information of the closed-loop topological node. As illustrated in FIG. 13, the current topological node is point X; the closed-loop topological node is point A and has position coordinates of (0, 0); and the actual position point after the smart device moves to the closed-loop topological node is A1, and position coordinates of the actual position point are (0, -5).

After the smart device moves to the closed-loop topological node according to the navigation path, the distance between the position point and the obstacle after the smart device moves to the closed-loop topological node may be detected according to the second method so as to obtain the obstacle information, and details are not given herein any further. The position coordinates of the position point after the smart device moves to the closed-loop topological node are calculated according to the position coordinates of the closed-loop topological node, the obstacle information of the closed-loop topological node, and the obstacle information of the position point after the smart device moves to the closed-loop topological node. That is, the actual position information after the smart device moves to the closed-loop topological node is determined.

In step 904, the position information of the determined topological node is corrected based on the actual position information and the position information of the closed-loop topological node.

In practice, after the smart device determines the actual position information after moving to the closed-loop topological node, the actual position information after the smart device moves to the closed-loop topological node and the position information of the closed-loop topological node can define a closed-loop constraint. For example, a horizontal coordinate difference and a vertical coordinate different may be 15 and 17 or the like, respectively. The closed-loop constraint is gradually optimized by using general optimization tools such as general graph optimization (G2O), Ceres Solver or the like, such that the actual position information after the smart device moves to the closed-loop topological node is more approximate to the recorded position information of the closed-loop topological node. The position information of the determined topological node is corrected, such that the position information of the determined topological node is more accurate.

After the position information of the determined topological node is corrected, the established grid map is updated according to the corrected position information, such that the established grid map is more accurate.

It should be noted that the method of correcting the position information of the determined topological node is same as the method of performing position correction using the closed-loop constraint in the related art. Any of the methods that may be employed to perform position correction according to the closed-loop constraint may be applied in the embodiment of the present disclosure, which is not limited in the embodiment of the present disclosure.

In addition, in the embodiment of the present disclosure, each time a topological node is determined, the current topological node may be connected to the previous topological node to form a topological map. Similarly, after the position information of the determined topological node is corrected, the topological map can be updated with the corrected position information of the topological node so as to make the position information of each topological node in the topological map more accurate.

It should be noted that the above embodiment is described using the scenario where the executing subject is the smart device as an example. If the executing subject is a control terminal of the smart device, the executing process may be as follows: the user first establishes a connection between the smart device and the control terminal, such as a wireless connection, a Bluetooth connection or the like. After the smart device is placed in an unfamiliar region, the control terminal may be operated, and the smart device may be controlled to be turned on to start moving. The smart device sends position information to the control terminal in real time during the moving process. After the control terminal determines a topological node each time (the method of determining the topological node is same as the method of determining the topological node by the smart device, which will be not described herein any further), the control terminal may determine whether a target topological node exists. If the target topological node exists, the control terminal may select a closed-loop topological node from the target topological nodes, and control the smart device to move to the closed-loop topological node based on the position information of the closed-loop topological node. The smart device may detect the obstacle information on the closed-loop topological node, determine the actual position information after moving to the closed-loop topological node, and then send the actual position information to the control terminal. After receiving the actual position information, the control terminal may correct the position information of the determined topological node according to the actual position information and the position information of the closed-loop topological node.

In the embodiment of the present disclosure, during the mobile detection process for establishing a grid map for a target region, each time a topological node is determined, if at least one target topological node among the determined topological nodes has a topological distance to the current topological node is greater than the fifth preset threshold and has a grid distance to the current topological node is less than the sixth preset threshold, a closed-loop topological node is selected from the at least one target topological node. Based on the position information of the closed-loop topological node, the smart device is controlled to move to the closed-loop topological node. Based on obstacle information detected after the smart device moves to the closed-loop topological node, actual position information after the smart device moves to the closed-loop topological node is determined. Based on the actual position information and the position information of the closed-loop topological node, the position information of the determined topological node is corrected. In this way, the smart device selects the closed-loop topological node based on the judgment on the grid distance and the topological distance between the topological nodes, without using a scene image, thereby eliminating the need to store the scene image, and further saving storage resources.

Based on the same technical concept, an embodiment of the present disclosure further provides a device for detecting a presence probability of obstacle in an unknown position. As illustrated in FIG. 14, the device comprises:

a first determining module 1210, configured to determine at least one frontier included in a currently established map during a mobile detection process for establishing a map for a target region, wherein the frontier is a position point which is in an unoccupied position and is adjacent to a border between the unoccupied position and an unknown position in the map;
a second determining module 1220, configured to determine a target frontier which satisfies a preset detection condition from the at least one frontier based on the position information of the at least one frontier; and
a detecting module 1230, configured to control a smart device to move to the target frontier, and detect a presence probability of obstacle in the unknown position included in the map.

Optionally, the map is a grid map, the unknown position is an unknown grid, and the unoccupied positions are unoccupied grids.

The frontier is a center point of a grid in the map that is unoccupied and is adjacent to a border between the unknown grid and the unoccupied grid.

Optionally, as illustrated in FIG. 15, the second determining module 1220 includes a first determining submodule 1221, a selecting submodule 1222, and a second determining submodule 1223.

The first determining submodule 1221 is configured to determine at least one frontier region based on the position information of the at least one frontier, wherein each of the at least one frontier region comprises at least one frontier, and a distance between any two frontiers belonging to different frontier regions is greater than a preset value.

The first selecting submodule 1222 is configured to select at least one candidate frontier from the frontiers included in each frontier region.

The second determining submodule 1223 is configured to determine a target frontier satisfying the preset detection condition from the at least one candidate frontier that has been selected.

Optionally, the first selecting submodule 1222 is configured to:
determine, from the frontiers included in each of the at least one frontier region, a frontier at the center position as the candidate frontier corresponding to each of the at least one frontier region.

Optionally, the second determining submodule 1223 is configured to:

determine a quantity of frontiers included in each of the at least one frontier region, and determine a candidate frontier corresponding to a frontier region having a largest quantity of frontiers as the target frontier; or
determine a navigation path length from a current position point to each of the candidate frontiers, and determine a candidate frontier corresponding to a minimum navigation path length as the target frontier; or
determine the quantity of frontiers included in each of the at least one frontier region, and determine a navigation path length from a current position point to each of the candidate frontier, perform a weighting operation according to a preset weighting coefficient of the navigation path length and a preset weighting coefficient of the quantity of frontiers, as well as the navigation path length corresponding to each of the at least one candidate frontier and the quantity of frontiers included in each of the at least one the frontier region to which each of the at least one the candidate frontier belongs to determine a weighted value corresponding to each of the at least one candidate frontier, and determine a candidate frontier corresponding to a maximum weighted value as the target frontier.

Optionally, the first determining module 1210 is configured to:

during the mobile detection process for establishing the grid map for the target region, determine at least one frontier included in the currently established grid map when a pose uncertainty of the current position point is less than a first preset threshold, correct position information of each grid in the currently established grid map based on closed-loop detection when the pose uncertainty of the current position point is greater than or equal to the first preset threshold, and determine at least one frontier included in the currently established grid map upon completion of the correction.

Optionally, as illustrated in FIG. 16, the first determining module 1210 comprises a second selecting submodule 1211, a control submodule 1212, a third determining submodule 1213, and a correcting submodule 1214.

The second selecting submodule 1211 is configured to select a closed-loop topological node from at least one target topological node among determined topological nodes, wherein a topological distance from the at least one target topological node to the current position point is greater than a second present threshold and a grid distance from the at least one target topological node to the current position point is less than a third present threshold.

The control submodule 1212 is configured to control, based on position information of the closed-loop topological node, the smart device to move to the closed-loop topological node.

The third determining submodule 1213 is configured to determine, based on obstacle information detected after the smart device moves to the closed-loop topological node, actual position information after the smart device moves to the closed-loop topological node.

The correcting submodule 1214 is configured to correct, based on the actual position information and the position information of the closed-loop topological node, position information of the determined topological node.

The correcting submodule 1214 is configured to correct, based on the position information of the determined topological node, the position information of respective grids in the established grid map.

The second selecting submodule 1211 is configured to:

select a closed-loop topological node from the at least one target topological node when the current position point is determined as a topological node, and a topological distance from the at least one target topological node among the determined topological nodes to the current position point is greater than the second preset threshold and a grid distance from the at least one target topological node among the determined topological nodes to the current position point is less than the third preset threshold.

Optionally, the topological nodes determined in the mobile detection process are a position point where the mobile detection process starts, and a position point on a moving trajectory with a grid distance to a previous topological node is equal to a preset value; or

the topological nodes determined in the mobile detection process are a position point where the mobile detection process starts and a position point among position points with a shortest grid distance to a previous topological node, wherein an obstacle exists on a line connecting the respective position points to the previous topological node; or

the topological nodes determined in the mobile detection process are a position point where the mobile detection process starts, a position point on a moving trajectory with a grid distance to a previous topological node is equal to a preset value, and a position point among position points with a shortest grid distance to a previous topological node, wherein an obstacle exists on a line connecting the respective position points to the previous topological node.

Optionally, the second selecting submodule 1211 is configured to:

select the closed-loop topological node from the at least one target topological node when the at least one target topological node among the determined topological nodes, wherein the topological distance from the at least one target topological node to the current position point is greater than the second preset threshold and a grid distance from the at least one target topological node to the current position point is less than the third preset threshold, and the pose uncertainty of the current position point is greater than a fourth preset threshold.

Optionally, the second selecting submodule 1211 is configured to:

determine a navigation path length from the current position point to each of the at least one target topological node, and select, from the at least one target topological node, a target topological node corresponding to a minimum navigation path length as the closed-loop topological node; or

select, from the at least one target topological node, a target topological node with the minimum pose uncertainty as the closed-loop topological node; or

determine a navigation path length from the current position point to each of the at least one target topological node, perform a weighting operation according to a preset weighting coefficient of the pose uncertainty and a preset weighting coefficient of the navigation path length, as well as the navigation path length and the pose uncertainty corresponding to each of the at least one target topological node to determine a weighted value corresponding to each of the at least one target topological node, and select, from the at least one target topological node, a target topological node with a minimum weighted value as the closed-loop topological node.

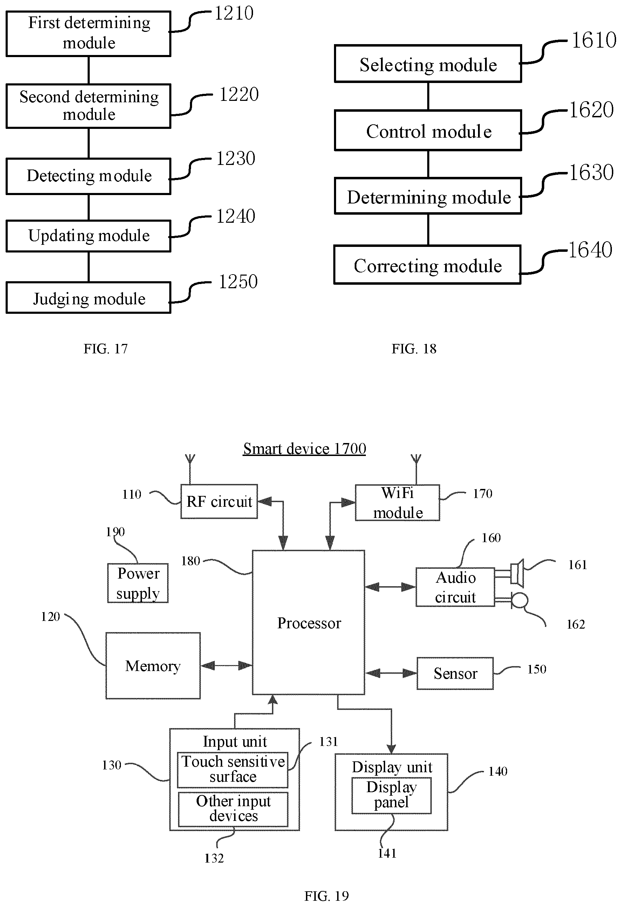

Optionally, as illustrated in FIG. 17, the device further includes:

an updating module 1240, configured to update the map with the presence probability of obstacle in the detected unknown position; and
a judging module 1250, configured to configured to proceed to the process of determining at least one frontier included in the currently established map when the updated map further comprises an unknown position.

In the embodiment of the present disclosure, the smart device or the control terminal of the smart device may select a target frontier satisfying a preset detection condition from at least one frontier included in the established map, and then control the smart device to move to the target frontier. The smart device may detect the presence probability of obstacle in an unknown grid included in the map, and the user does not need to control the smart device to move, thereby saving time for users.

It should be noted that, when the device for detecting the presence probability of obstacle in an unknown position according to the above embodiment is configured to detect the presence probability of obstacle in an unknown position, examples are given by illustrating the individual functional modules. In actual application, the above functions may be performed by different functional modules, that is, the internal structure of the device may be divided into different functional modules to realize all or part of the above-described functions. Besides, the embodiments of the device for detecting a presence probability of obstacle in an unknown position and the method for detecting a presence probability of obstacle in an unknown position according to the above embodiments are based on the same disclosure concept, and the specific implementation of the device and method may be referenced to the method embodiments. Therefore, the description thereof is not given herein any further.

Based on the same technical concept, an embodiment of the present disclosure further provides a device for correcting a position of a topological node based on closed-loop detection. As illustrated in FIG. 18, the device comprises:

a selecting module 1610, configured to, during a mobile detection process for establishing a grid map for a target region, each time a topological node is determined, select a closed-loop topological node from at least one target topological node among the determined topological nodes, when the at least one target topological node has a topological distance to a current topological node greater than a fifth preset threshold and has a grid distance to the current topological distance less than a sixth preset threshold;
a control module 1620, configured to control, based on position information of the closed-loop topological node, a smart device to move to the closed-loop topological node;
a determining module 1630, configured to determine, based on obstacle information detected after the smart device moves to the closed-loop topological node, actual position information after the smart device moves to the closed-loop topological node; and
a correcting module 1640, configured to correct, based on the actual position information and the position information of the closed-loop topological node, the position information of the determined topological node.

Optionally, the topological nodes determined in the mobile detection process are a position point where the mobile detection process starts and a position point on a moving trajectory with a grid distance to a previous topological node is equal to a preset value; or
the topological nodes determined in the mobile detection process are a position point where the mobile detection process starts and a position point among position points with a shortest grid distance to a previous topological node, wherein an obstacle exists on a line connecting the respective position points to the previous topological node.

Optionally, the selecting module 1610 is configured to:

determine a navigation path length from the current topological node to respective target topological nodes; and
select, from the at least one target topological node, a target topological node corresponding to a minimum navigation path length as the closed-loop topological node.

Optionally, the selecting module 1610 is configured to:

select, from the at least one target topological node, a target topological node with a minimum pose uncertainty as the closed-loop topological node; or
determine a navigation path length from a current topological node to respective target topological nodes, perform a weighting operation according to a preset weighting coefficient of the pose uncertainty and a preset weighting coefficient of the navigation path length, as well as the navigation path length and the pose uncertainty corresponding to respective target topological nodes to determine a weighted value corresponding to respective target topological nodes, and select, from the at least one target topological node, a target topological node with a minimum weighted value as the closed-loop topological node.

Optionally, the selecting module 1610 is configured to:

select a closed-loop topological node from at least one target topological node among the determined topological nodes when the at least one target topological node has a topological distance to the current topological node is greater than the fifth preset threshold and has a grid distance to the current topological distance is less than the sixth preset threshold, and a pose uncertainty of the current topological node is greater than a seventh preset threshold.

In the embodiment of the present disclosure, during the mobile detection process for establishing the grid map for the target region, each time a topological node is determined, when at least one target topological node among the determined topological nodes has a topological distance to the current topological node is greater than the fifth preset threshold and has a grid distance to the current topological distance is less than the sixth preset threshold, a closed-loop topological node is selected from the at least one target topological node. Based on the position information of the closed-loop topological node, the smart device is controlled to move to the closed-loop topological node. Based on obstacle information detected after the smart device moves to the closed-loop topological node, actual position information after the smart device moves to the closed-loop topological node is determined. Based on the actual position information and the position information of the closed-loop topological node, the position information of the determined topological node is corrected. In this way, the closed-loop topological node may be found without storing a scene image, thereby saving storage resources.

It should be noted that when the device for performing topological node position correction based on closed-loop detection according to this embodiment performs topological node position correction based on closed-loop detection only takes division of all the functional modules as an example for explanation. In practice, the above functions may be implemented by the different functional modules as required. That is, the device is divided into different functional modules in terms of internal structure, to implement all or part of the functions described above. In addition, the device for performing topological node position correction based on closed-loop detection according to this embodiment is based on the same concept as the method for performing topological node position correction based on closed-loop detection according to the embodiment. The specific implementation of the device may be referenced to the method embodiment, which is not described herein any further.

FIG. 19 is a schematic structural diagram of a smart device or control terminal involved in the embodiments of the present disclosure (here a smart device is illustrated as an example). The smart device may be configured to implement the method of detecting a presence probability of obstacle in an unknown position and the method of performing topological node position correction based on closed-loop detection described in the above embodiments of the present disclosure. Specifically:

The smart device 1700 can comprise a radio frequency (RF) circuit 110, a memory 120 comprising one or more computer-readable storage media, an input unit 130, a display unit 140, a sensor 150, an audio circuit 160, a WiFi (Wireless Fidelity) module 170, a processor 180 comprising one or more processing cores, a power supply 190, or the like. It may be understood by one of ordinary skill in the art that the smart device structure illustrated in FIG. 19 does not impose a limitation to the smart device. The smart device may comprise more or less components than those in FIG. 19, a combination of some components or different component layouts.

The RF circuit 110 can be configured to receive and send messages during receiving and sending or a call, in particular, to hand over downlink information received from a base station to one or more processors 180 for processing, and furthermore, to transmit uplink data to the base station. Usually, the RF circuit 110 comprises but not limited to an antenna, at least one amplifier, a tuner, one or more oscillators, a subscriber identification module (SIM) card, a transceiver, a coupler, a low noise amplifier (LNA), a duplexer, or the like. Besides, the RF circuit 110 can further communicate with a network and other devices through wireless communication which can use any communication standard or protocol, comprising but not limited to global system of mobile communication (GSM), general packet radio service (GPRS), code division multiple access (CDMA), wideband code division multiple access (WCDMA), long term evolution (LTE), e-mails and short messaging service (SMS).

The memory 120 can be configured to store a software program and a module. The processor 180 executes various function applications and data processing by running the software programs and the modules, which are stored in the memory 120. The memory 120 may mainly include a program storage region and a data storage region. An operation system, an application required by at least one function (such as an audio playback function and an image playback function) may be stored in the program storage region. Data (such as audio data and a phone book) built based on the use of the smart device 1700 can be stored in the data storage region. Moreover, the memory 120 may comprise a high-speed random access memory and may further comprise a nonvolatile memory, such as at least one disk memory, a flash memory or other volatile solid state memories. Correspondingly, the memory 120 may further comprise a memory controller to provide access to the memory 120 by the processor 180 and the input unit 130.

The input unit 130 may be configured to receive input digital or character information and to generate keyboard, mouse, manipulator, optical or trackball signal inputs related to user settings and functional control. In particular, the input unit 130 may comprise a touch-sensitive surface 131 and other input devices 132. The touch sensitive surface 131 is further called a touch display screen or a touch panel, and may be configured to collect touch operations (for example, the operations of the users with their fingers, styluses or the like suitable objects or accessories on the touch sensitive surface 131 or around the touch sensitive surface 131) of users thereon or therearound, and drive a corresponding connection device based on a preset program. Optionally, the touch sensitive surface 131 may comprise two portions, namely a touch detection device and a touch controller. The touch detection device may be configured to detect a touch orientation of the user and a signal generated by a touch operation, and transmit the signal to the touch controller. The touch controller may be configured to receive touch information from the touch detection device, convert the received touch information into contact coordinates, and send the contact coordinates to the processor 180,, and may further be configured to receive and execute a command issued by the processor 180. In addition, the touch sensitive surface 131 may be practiced by resistive, capacitive, infrared, surface acoustic wave (SAW) or other types of touch surfaces. In addition to the touch-sensitive surface 131, the input unit 130 may further include other input devices 132. In particular, these other input devices 132 may include but not limited to one or more of a physical keyboard, function keys (such as a volume control key and a switch key), a trackball, a mouse, a manipulator, or the like.

The display unit 140 may be configured to display information input by the user or information provided for the user and various graphic user interfaces of the smart device 1700. These graphic user interfaces may be constituted by graphs, texts, icons, videos and any combination thereof. The display unit 140 may include a display panel 141. Optionally, the display panel 141 may be configured by using a liquid crystal display (LCD), an organic light-emitting diode (OLED) or the like. Further, the touch-sensitive surface 131 may cover the display panel 141. Further, the touch sensitive surface 131 may cover the display panel 141. Upon detecting a touch operation thereon or therearound, the touch sensitive surface 131 transmits the touch operation to the processor 180 to determine the type of a touch event, such that the processor 180 provides a corresponding visual output on the display panel 141 based on the type of the touch event. Although in FIG. 19, the touch sensitive surface 131 and the display panel 141 implement the input and output functions as two independent components, in some embodiments, the touch sensitive surface 131 and the display panel 141 may further be integrated to implement the input and output functions.

The smart device 1700 may further include at least one sensor 150, such as a photo-sensor, a motion sensor and other sensors. In particular, the photo-sensor may include an ambient light sensor and a proximity sensor. The ambient light sensor may adjust the luminance of the display panel 141 based on the brightness of ambient light. The proximity sensor may turn off the display panel 141 and/or a backlight when the smart device 1700 moves to an ear. As one of the motion sensors, a gravity acceleration sensor may detect accelerations in all directions (generally, three axes), may further detect the magnitude and the direction of gravity when in still, and may be applied to mobile phone attitude recognition applications (such as portrait and landscape switching, related games and magnetometer attitude correction), relevant functions of vibration recognition (such as a pedometer and knocking), or the like. Other sensors such as a gyroscope, a barometer, a hygrometer, a thermometer and an infrared sensor, which may be configured for the smart device 1700, and are thus not described herein any further.

The audio circuit 160, a speaker 161 and a microphone 162 may provide an audio interface between the user and the smart device 1700. On one hand, the audio circuit 160 may transmit an electrical signal converted from the received audio data to the speaker 161, and the electrical signal is converted by the speaker 161 into an acoustical signal for outputting. And on the other hand, the microphone 162 converts the collected acoustical signal into an electrical signal, the audio circuit 160 receives the electrical signal, converts the received electrical signal into audio data, and outputs the audio data to the processor 180 for processing, and the processed audio data is transmitted to another terminal by the RF circuit 110. Alternatively, the audio data is output to the memory 120 to be further processed. The audio circuit 160 may further include an earplug jack to provide a communication between an external earphone and the smart device 1700.

WiFi pertains to short-range wireless transmission technologies. The terminal 1700 may help the user to send and receive emails, browse webpages, access streaming media and the like by the WiFi module 170 which provides wireless broadband Internet access for the user. It may be understood that the WiFi module 170 illustrated in FIG. 19 is not a necessary component of the smart device 1700, and may be completely omitted as required without changing the essence of the present disclosure.

The processor 180 is a control center of the smart device 1700, links all portions of an entire mobile phone by various interfaces and circuits. By running or executing the software programs and/or the modules stored in the memory 120 and invoking data stored in the memory 120, the processor executes various functions of the smart device and processes the data so as to wholly monitor the mobile phone. Optionally, the processor 180 may include one or more processing centers. Preferably, the processor 180 may be integrated with an application processor and a modulation and demodulation processor. The application processor is mainly configured to process the operation system, a user interface, an application, or the like. The modulation and demodulation processor is mainly configured to process radio communication. Understandably, the modulation and demodulation processor may not be integrated with the processor 180.

The smart device 1700 may further include the power supply 190 (for example, a battery) for powering up all the components. Preferably, the power supply is logically connected to the processor 180 through a power management system to manage charging, discharging, power consumption, or the like through the power management system. The power supply 190 may further include one or more of any of the following components: a direct current (DC) or alternating current (AC) power supply, a recharging system, a power failure detection circuit, a power converter or inverter and a power state indicator.

Although not illustrated, the smart device 1700 may further include a camera, a Bluetooth module or the like, which are not described herein any further. Particularly in this embodiment, the display unit of the smart device 1700 is a touch screen display and further includes a memory and one or more programs. The one or more programs are stored in the memory. One or more processors are configured to execute instructions, included by the one or more programs, for implementing the instructions of the method for detecting a presence probability of obstacle in an unknown position illustrated in FIGS. 1, 2, 4 and 9 of the present disclosure, and the instructions of the method for performing topological node position correction based on closed-loop detection illustrated in FIG. 11 of the present disclosure.

In an exemplary embodiment, there is further provided a non-transitory computer-readable storage medium including instructions, for example, a memory. These instructions may be executed by the processor of the smart device to perform the above method for detecting a presence probability of obstacle in an unknown position and the above method for performing topological node position correction based on closed-loop detection. For example, the nontemporary computer-readable storage medium may be a read-only memory (ROM), a random-access memory (RAM), or a compact disc read-only memory (CD-ROM), a tape, a floppy disk, an optical data storage device or the like.

Those skilled in the art may understand that all or part of the steps of implementing the above embodiments may be completed by hardware, or may be completed by related hardware instructed by a program, and the program may be stored in a computer readable storage medium. The storage medium mentioned above may be a read-only memory, a magnetic disk or an optical disk or the like.

## Claims

1. A method of detecting presence probability of obstacle in an unknown position, wherein the method comprises:

   establishing a grid map for a target region, wherein the grid map comprises unoccupied grid cells, occupied grid cells and unknown grid cells;
   the method **characterized by**:

   labeling an unoccupied grid cell adjacent to an unknown grid cell as an unknown grid cell on a currently established grid map in a preprocessing;
   determining (101) at least one frontier included in the currently established grid map during a mobile detection process for establishing the grid map for the target region;
   determining (102) a target frontier which satisfies a preset detection condition from the at least one frontier based on position information of the at least one frontier; and
   controlling (103) a smart device to move to the target frontier and to detect, by a distance sensor, presence probability of obstacle in the unknown position included in the grid map; and
   wherein the frontier is a center point of a grid cell in the grid map which is unoccupied and is adjacent to a border between the unknown grid cell and the unoccupied grid cell.

2. The method according to claim 1, being **characterized in that** determining (102) the target frontier satisfying the preset detection condition from the at least one frontier based on the position information of the at least one frontier comprises:

   determining (2021) at least one frontier region based on the position information of the at least one frontier, wherein each of the at least one frontier region comprises at least one frontier, and a distance between any two frontiers belonging to different frontier regions is greater than a preset value;
   selecting (2022) a candidate frontier from each of the at least one frontier included in each of the at least one frontier region; and
   determining (2023) the target frontier satisfying the preset detection condition from the candidate frontiers that has been selected.

3. The method according to claim 2, being **characterized in that** selecting (2022) the candidate frontier from the at least one frontier included in each of the at least one frontier region comprises:

determining, from the frontiers included in each of the at least one frontier region, a frontier at the center position as the candidate frontier corresponding to each of the at least one frontier region.

4. The method according to claim 2, being **characterized in that** determining (2023) the target frontier satisfying the preset detection condition from the candidate frontiers that has been selected comprises:

determining a quantity of frontiers included in each of the at least one frontier region, and determining a candidate frontier corresponding to a frontier region having a greatest quantity of frontiers as the target frontier; or determining a navigation path length from a current position point to each of the candidate frontiers, and determining a candidate frontier corresponding to a minimum navigation path length as the target frontier; or determining a quantity of frontiers included in each of the at least one frontier region and determining a navigation path length from a current position point to each of the candidate frontiers, performing a weighting operation according to a preset weighting coefficient of the navigation path length and a preset weighting coefficient of the quantity of frontiers, as well as the navigation path length corresponding to each of the at least one candidate frontier and the quantity of frontiers included in each of the at least one frontier region to which each of the at least one candidate frontier belongs to determine a weighted value corresponding to each of the at least one candidate frontier, and determining a candidate frontier corresponding to a maximum weighted value as the target frontier.

5. The method according to any one of claims 1 to 4, being **characterized in that** determining (101) at least one frontier included in the grid map that is established currently during the mobile detection process for establishing the grid map for a target region comprises:

during the mobile detection process for establishing the grid map for the target region, determining at least one frontier included in the currently established grid map when a pose uncertainty of a current position point is less than a first preset threshold, correcting position information of respective grids in the currently established grid map based on closed-loop detection when the pose uncertainty of the current position point is greater than or equal to the first preset threshold, and determining the at least one frontier included in the currently established grid map after the correcting.

6. The method according to claim 5, being **characterized in that** correcting the position information of the respective grids in the currently established grid map comprises:

selecting (701) a closed-loop topological node from at least one target topological node among determined topological nodes, wherein a topological distance from the at least one target topological node to the current position point is greater than a second preset threshold and a grid distance from the at least one target topological node to the current position point is less than a third preset threshold; controlling (702), based on position information of the closed-loop topological node, the smart device to move to the closed-loop topological node; determining (703), based on obstacle information detected after the smart device moves to the closed-loop topological node, actual position information of the smart device after the smart device moves to the closed-loop topological node; correcting (704), based on the actual position information and the position information of the closed-loop topological node, position information of the determined topological node; and correcting (705), based on the position information of the determined topological node, the position information of respective grids in the established grid map.

7. The method according to claim 6, being **characterized in that** selecting (701) a closed-loop topological node from at least one target topological node among determined topological nodes, wherein a topological distance from the at least one target topological node to the current position point is greater than a second preset threshold and a grid distance from the at least one target topological node to the current position point is less than a third preset threshold, comprises:

selecting a closed-loop topological node from the at least one target topological node when the current position point is determined as a topological node and a topological distance from the at least one target topological node among the determined topological nodes to the current position point is greater than the second preset threshold and a grid distance from the at least one target topological node among the determined topological nodes to the current position point is less than the third preset threshold.

**8.** The method according to claim 6 or 7, being **characterized in that** the topological nodes determined in the mobile detection process are a position point where the mobile detection process starts and a position on a moving trajectory with a grid distance to a previous topological node is equal to a preset value; or

> the topological nodes determined in the mobile detection process are a position point where the mobile detection process starts and a position point among position points with a shortest grid distance to a previous topological node, wherein an obstacle exists on a line connecting the respective position points to the previous topological node; or
> the topological nodes determined in the mobile detection process are a position point where the mobile detection process starts, a position point on a moving trajectory with a grid distance to a previous topological node equal to a preset value, and a position point among position points with a shortest grid distance to a previous topological node, wherein an obstacle exists on a line connecting the respective position points to the previous topological node.

**9.** The method according to any one of claims 6 to 8, being **characterized in that** selecting (701) the closed-loop topological node from at least one target topological node among determined topological nodes, wherein the topological distance from the at least one target topological node to the current position point is greater than the second preset threshold and a grid distance from the at least one target topological node to the current position point is less than the third preset threshold comprises: selecting the closed-loop topological node from the at least one target topological node when the at least one target topological node among the determined topological nodes, wherein the topological distance from the at least one target topological node to the current position point is greater than the second preset threshold and a grid distance from the at least one target topological node to the current position point is less than the third threshold, and a post uncertainty of the current position point is greater than a fourth preset threshold.

**10.** The method according to any one of claims 6 to 9, being **characterized in that** selecting (701) the closed-loop topological node from the at least one target topological node comprises:

> determining a navigation path length from the current position point to each of the at least one target topological node, and selecting, from the at least one target topological node, a target topological node corresponding to a minimum navigation path length as the closed-loop topological node; or
selecting, from the at least one target topological node, a target topological node with a minimum pose uncertainty as the closed-loop topological node; or
determining a navigation path length from the current position point to each of the at least one target topological node, performing a weighting operation according to a preset weighting coefficient of the pose uncertainty and a preset weighting coefficient of the navigation path length, as well as the navigation path length and the pose uncertainty corresponding to each of the at least one target topological node, to determine a weighted value corresponding to each of the at least one target topological node, and selecting, from the at least one target topological node, a target topological node with the minimum weighted value as the closed-loop topological node.

**11.** The method according to any one of claims 1 to 10, being **characterized in that** after detecting presence probability of obstacle in the unknown position included in the map, the method further comprises:

> updating the map with the detected presence probability of obstacle in the unknown position; and
> proceeding to the process of determining at least one frontier included in the currently established map when the updated map further comprises an unknown position.

**12.** A non-transitory computer-readable storage medium, being **characterized in that** a computer program is stored on the storage medium, the computer program, when being executed by a processor, causes the processor to perform the steps in the method as claimed in any one of claims 1 to 11.

**13.** A terminal, wherein the terminal comprises:

> one or more processors (180); and
> a memory (120); wherein
> one or more programs are stored in the memory (120), the one or more programs being configured to be executed by the one or more processors (180), and the one or more programs comprising instructions configured to perform the following steps:
>
> > establishing a grid map for a target region, wherein the grid map comprises unoccupied grid cells, occupied grid cells and unknown grid cells;

**characterized by**:

labeling an unoccupied grid cell adjacent to an unknown grid cell as an unknown grid cell on a currently established grid map in a preprocessing;
determining (101) at least one frontier included in the currently established grid map during a mobile detection process for establishing the grid map for the target region;
determining (102) a target frontier which satisfies a preset detection condition from the at least one frontier based on position information of the at least one frontier; and
controlling (103) a smart device to move to the target frontier and to detect, by a distance sensor, presence probability of obstacle in the unknown position included in the grid map; and
wherein the frontier is a center point of a grid cell in the grid map which is unoccupied and is adjacent to a border between the unknown grid cell and the unoccupied grid cell.

**Patentansprüche**

1. Verfahren zum Erfassen von Anwesenheitswahrscheinlichkeit eines Hindernisses an einer unbekannten Position, wobei das Verfahren umfasst:

Erstellen einer Gitterkarte für eine Zielregion, wobei die Gitterkarte unbesetzte Gitterzellen, besetzte Gitterzellen und unbekannte Gitterzellen umfasst;
wobei das Verfahren **gekennzeichnet ist durch**:

Kennzeichnen einer unbesetzten Gitterzelle, die an eine unbekannte Gitterzelle angrenzt, als unbekannte Gitterzelle auf einer derzeit erstellten Gitterkarte in einer Vorverarbeitung;
Bestimmen (101) mindestens einer Grenze, die in der derzeit erstellten Gitterkarte beinhaltet ist, während eines mobilen Erfassungsprozesses zum Erstellen der Gitterkarte für die Zielregion;
Bestimmen (102) einer Zielgrenze, die eine voreingestellte Erfassungsbedingung erfüllt, aus der mindestens einen Grenze auf der Grundlage von Positionsinformationen der mindestens einen Grenze; und
Steuern (103) einer intelligenten Vorrichtung zum Bewegen zur Zielgrenze und zum Erfassen, **durch** einen Abstandssensor, von Anwesenheitswahrscheinlichkeit eines Hindernisses an der unbekannten Position, die in der Gitterkarte beinhaltet ist; und
wobei die Grenze ein Mittelpunkt einer Gitterzelle in der Gitterkarte ist, die unbesetzt ist und an eine Grenze zwischen der unbekannten Gitterzelle und der unbesetzten Gitterzelle angrenzt.

2. Verfahren nach Anspruch 1, **dadurch gekennzeichnet, dass** das Bestimmen (102), dass die Zielgrenze die voreingestellte Erfassungsbedingung erfüllt, aus der mindestens einen Grenze auf der Grundlage der Positionsinformationen der mindestens einen Grenze umfasst:

Bestimmen (2021) mindestens einer Grenzregion auf der Grundlage der Positionsinformationen der mindestens einen Grenze, wobei jede der mindestens einen Grenzregion mindestens eine Grenze umfasst und ein Abstand zwischen zwei beliebigen Grenzen, die zu verschiedenen Grenzregionen gehören, größer als ein voreingestellter Wert ist;
Auswählen (2022) einer in Frage kommenden Grenze aus jeder der mindestens einen Grenze, die in jeder der mindestens einen Grenzregion beinhaltet ist; und
Bestimmen (2023) der Zielgrenze, die die voreingestellte Erfassungsbedingung erfüllt, aus den ausgewählten in Frage kommenden Grenzen.

3. Verfahren nach Anspruch 2, **dadurch gekennzeichnet, dass** das Auswählen (2022) der in Frage kommenden Grenze aus der mindestens einen Grenze, die in jeder der mindestens einen Grenzregion beinhaltet ist, umfasst: Bestimmen, aus den Grenzen, die in jeder der mindestens einen Grenzregion beinhaltet sind, einer Grenze an der Mittelposition als die in Frage kommende Grenze, die jeder der mindestens einen Grenzregion entspricht.

4. Verfahren nach Anspruch 2, **dadurch gekennzeichnet, dass** das Bestimmen (2023) der Zielgrenze, die die voreingestellte Erfassungsbedingung erfüllt, aus den ausgewählten in Frage kommenden Grenzen umfasst:

Bestimmen einer Anzahl von Grenzen, die in jeder der mindestens einen Grenzregion beinhaltet sind, und Bestimmen einer in Frage kommenden Grenze, die einer Grenzregion mit der größten Anzahl von Grenzen entspricht, als die Zielgrenze; oder
Bestimmen einer Navigationsweglänge von einem aktuellen Positionspunkt zu jeder der in Frage kommenden Grenzen und Bestimmen einer in Frage kommenden Grenze, die einer minimalen Navigationsweglänge entspricht, als die Zielgrenze; oder

Bestimmen einer Anzahl von Grenzen, die in jeder der mindestens einen Grenzregion beinhaltet sind, und Bestimmen einer Navigationsweglänge von einem aktuellen Positionspunkt zu jeder der in Frage kommenden Grenzen, Durchführen einer Gewichtungsoperation gemäß einem voreingestellten Gewichtungskoeffizienten der Navigationsweglänge und einem voreingestellten Gewichtungskoeffizienten der Anzahl von Grenzen sowie der Navigationsweglänge, die jeder der mindestens einen in Frage kommenden Grenze entspricht, und der Anzahl von Grenzen, die in jeder der mindestens einen Grenzregion beinhaltet sind, zu der jede der mindestens einen in Frage kommenden Grenze gehört, zum Bestimmen eines gewichteten Wertes, der jeder der mindestens einen in Frage kommenden Grenze entspricht, und Bestimmen einer in Frage kommenden Grenze, die einem maximalen gewichteten Wert entspricht, als die Zielgrenze.

5. Verfahren nach einem der Ansprüche 1 bis 4, **dadurch gekennzeichnet, dass** das Bestimmen (101) mindestens einer Grenze, die in der Gitterkarte beinhaltet ist, die derzeit während des mobilen Erfassungsprozesses zum Erstellen der Gitterkarte für eine Zielregion erstellt wird, umfasst:

   während des mobilen Erfassungsprozesses zum Erstellen der Gitterkarte für die Zielregion, Bestimmen mindestens einer Grenze, die in der derzeit erstellten Gitterkarte beinhaltet ist, wenn eine Posenunsicherheit eines aktuellen Positionspunktes kleiner als ein erster voreingestellter Schwellenwert ist, Korrigieren von Positionsinformationen jeweiliger Gitter in der derzeit erstellten Gitterkarte auf der Grundlage der Erfassung eines geschlossenen Kreises, wenn die Posenunsicherheit des aktuellen Positionspunktes größer als oder gleich dem ersten voreingestellten Schwellenwert ist, und Bestimmen der mindestens einen Grenze, die in der aktuell erstellten Gitterkarte beinhaltet ist, nach der Korrektur.

6. Verfahren nach Anspruch 5, **dadurch gekennzeichnet, dass** das Korrigieren der Positionsinformationen der jeweiligen Gitter in der derzeit erstellten Gitterkarte umfasst:

   Auswählen (701) eines topologischen Knotens mit geschlossenem Kreis aus mindestens einem topologischen Zielknoten unter den bestimmten topologischen Knoten, wobei ein topologischer Abstand vom mindestens einen topologischen Zielknoten zum aktuellen Positionspunkt größer als ein zweiter voreingestellter Schwellenwert ist und ein Gitterabstand vom mindestens einen topologischen Zielknoten zum aktuellen Positionspunkt kleiner als ein dritter voreingestellter Schwellenwert ist;

Steuern (702), auf der Grundlage von Positionsinformationen des topologischen Knotens mit geschlossenem Kreis, der intelligenten Vorrichtung zum Bewegen zum topologischen Knoten mit geschlossenem Kreis; Bestimmen (703), auf der Grundlage der Hindernisinformationen, die erfasst werden, nachdem sich die intelligente Vorrichtung zum topologischen Knoten mit geschlossenem Kreis bewegt hat, von tatsächlichen Positionsinformationen der intelligenten Vorrichtung, nachdem sich die intelligente Vorrichtung zum topologischen Knoten mit geschlossenem Kreis bewegt hat; Korrigieren (704), auf der Grundlage der tatsächlichen Positionsinformationen und der Positionsinformationen des topologischen Knotens mit geschlossenem Kreis, der Positionsinformationen des bestimmten topologischen Knotens; und Korrigieren (705), auf der Grundlage der Positionsinformation des bestimmten topologischen Knotens, der Positionsinformationen der jeweiligen Gitter in der erstellten Gitterkarte.

7. Verfahren nach Anspruch 6, **dadurch gekennzeichnet, dass** das Auswählen (701) eines topologischen Knotens mit geschlossenem Kreis aus mindestens einem topologischen Zielknoten unter den bestimmten topologischen Knoten, wobei ein topologischer Abstand vom mindestens einen topologischen Zielknoten zum aktuellen Positionspunkt größer als ein zweiter voreingestellter Schwellenwert ist und ein Gitterabstand vom mindestens einen topologischen Zielknoten zum aktuellen Positionspunkt kleiner als ein dritter voreingestellter Schwellenwert ist, umfasst:

   Auswählen eines topologischen Knotens mit geschlossenem Kreis aus dem mindestens einen topologischen Zielknoten, wenn der aktuelle Positionspunkt als topologischer Knoten bestimmt wird und ein topologischer Abstand vom mindestens einen topologischen Zielknoten unter den bestimmten topologischen Knoten zum aktuellen Positionspunkt größer ist als der zweite voreingestellte Schwellenwert und ein Gitterabstand vom mindestens einen topologischen Zielknoten unter den bestimmten topologischen Knoten zum aktuellen Positionspunkt kleiner ist als der dritte voreingestellte Schwellenwert.

8. Verfahren nach Anspruch 6 oder 7, **dadurch gekennzeichnet, dass** die topologischen Knoten, die im mobilen Erfassungsprozess bestimmt werden, ein Positionspunkt sind, an dem der mobile Erfassungsprozess beginnt, und eine Position auf einer sich bewegenden Trajektorie mit einem Gitterabstand zu einem vorherigen topologischen Knoten gleich einem voreingestellten Wert ist; oder

die topologischen Knoten, die im mobilen Erfassungsprozess bestimmt werden, ein Positionspunkt sind, an dem der mobile Erfassungsprozess beginnt, und ein Positionspunkt unter Positionspunkten mit einem kürzesten Gitterabstand zu einem vorherigen topologischen Knoten sind, wobei ein Hindernis auf einer Linie existiert, die die jeweiligen Positionspunkte mit dem vorherigen topologischen Knoten verbindet; oder

die topologischen Knoten, die im mobilen Erfassungsprozess bestimmt werden, ein Positionspunkt sind, an dem der mobile Erfassungsprozess beginnt, ein Positionspunkt auf einer sich bewegenden Trajektorie mit einem Gitterabstand zu einem vorherigen topologischen Knoten, der gleich einem voreingestellten Wert ist, und ein Positionspunkt unter Positionspunkten mit einem kürzesten Gitterabstand zu einem vorherigen topologischen Knoten sind, wobei ein Hindernis auf einer Linie existiert, die die jeweiligen Positionspunkte mit dem vorherigen topologischen Knoten verbindet.

9. Verfahren nach einem der Ansprüche 6 bis 8, **dadurch gekennzeichnet, dass** das Auswählen (701) des topologischen Knotens mit geschlossenem Kreis aus mindestens einem topologischen Zielknoten unter den bestimmten topologischen Knoten, wobei der topologische Abstand vom mindestens einen topologischen Zielknoten zum aktuellen Positionspunkt größer als der zweite voreingestellte Schwellenwert ist und ein Gitterabstand vom mindestens einen topologischen Zielknoten zum aktuellen Positionspunkt kleiner als der dritte voreingestellte Schwellenwert ist, umfasst:
Auswählen des topologischen Knotens mit geschlossenem Kreis aus dem mindestens einen topologischen Zielknoten, wenn der mindestens eine topologische Zielknoten unter den bestimmten topologischen Knoten ist, wobei der topologische Abstand vom mindestens einen topologischen Zielknoten zum aktuellen Positionspunkt größer als der zweite voreingestellte Schwellenwert ist und ein Gitterabstand vom mindestens einen topologischen Zielknoten zum aktuellen Positionspunkt kleiner als der dritte Schwellenwert ist, und eine Posenunsicherheit des aktuellen Positionspunktes größer als ein vierter voreingestellter Schwellenwert ist.

10. Verfahren nach einem der Ansprüche 6 bis 9, **dadurch gekennzeichnet, dass** das Auswählen (701) des topologischen Knotens mit geschlossenem Kreis aus dem mindestens einen topologischen Zielknoten umfasst:

Bestimmen einer Navigationsweglänge vom aktuellen Positionspunkt zu jedem vom mindestens einen topologischen Zielknoten und Auswählen eines topologischen Zielknotens aus dem mindestens einen topologischen Zielknoten, der einer minimalen Navigationsweglänge entspricht, als den topologischen Knoten mit geschlossenem Kreis; oder
Auswählen, aus dem mindestens einen topologischen Zielknoten, eines topologischen Zielknotens mit einer minimalen Posenunsicherheit als den topologischen Knoten mit geschlossenem Kreis; oder
Bestimmen einer Navigationsweglänge vom aktuellen Positionspunkt zu jedem vom mindestens einen topologischen Zielknoten, Durchführen einer Gewichtungsoperation gemäß einem voreingestellten Gewichtungskoeffizienten der Posenunsicherheit und einem voreingestellten Gewichtungskoeffizienten der Navigationsweglänge sowie der Navigationsweglänge und der Posenunsicherheit, die jedem vom mindestens einen topologischen Zielknoten entsprechen, zum Bestimmen eines gewichteten Wertes, der jedem vom mindestens einen topologischen Zielknoten entspricht, und Auswählen, aus dem mindestens einen topologischen Zielknoten, eines topologischen Zielknotens mit dem minimalen gewichteten Wert, als den topologischen Knoten mit geschlossenem Kreis.

11. Verfahren nach einem der Ansprüche 1 bis 10, **dadurch gekennzeichnet, dass** nach dem Erfassen der Anwesenheitswahrscheinlichkeit eines Hindernisses an der unbekannten Position, die in der Karte beinhaltet ist, das Verfahren ferner umfasst:

Aktualisieren der Karte mit der erfassten Anwesenheitswahrscheinlichkeit eines Hindernisses an der unbekannten Position; und
Fortfahren mit dem Prozess des Bestimmens mindestens einer Grenze, die in der derzeit erstellten Karte beinhaltet ist, wenn die aktualisierte Karte weiter eine unbekannte Position umfasst.

12. Nichtflüchtiges, computerlesbares Speichermedium, **dadurch gekennzeichnet, dass** ein Computerprogramm auf dem Speichermedium gespeichert ist, wobei das Computerprogramm bei seiner Ausführung durch einen Prozessor den Prozessor veranlasst, die Schritte des Verfahrens nach einem der Ansprüche 1 bis 11 durchzuführen.

13. Endgerät, wobei das Endgerät folgende Elemente umfasst:

einen oder mehrere Prozessoren (180); und einen Speicher (120); wobei ein oder mehrere Programme im Speicher (120) gespeichert sind, wobei das eine oder die mehreren Programme dafür ausgelegt sind, vom einen oder den mehreren Prozessoren (180) ausgeführt zu werden, und das eine oder die mehreren Programme Anweisungen umfassen, die zum Durchführen der folgenden Schritte ausgelegt sind:

Erstellen einer Gitterkarte für eine Zielregion, wobei die Gitterkarte unbesetzte Gitterzellen, besetzte Gitterzellen und unbekannte Gitterzellen umfasst; **gekennzeichnet durch**:

Kennzeichnen einer unbesetzten Gitterzelle, die an eine unbekannte Gitterzelle angrenzt, als unbekannte Gitterzelle auf einer derzeit erstellten Gitterkarte in einer Vorverarbeitung; Bestimmen (101) mindestens einer Grenze, die in der derzeit erstellten Gitterkarte beinhaltet ist, während eines mobilen Erfassungsprozesses zum Erstellen der Gitterkarte für die Zielregion; Bestimmen (102) einer Zielgrenze, die eine voreingestellte Erfassungsbedingung erfüllt, aus der mindestens einen Grenze auf der Grundlage von Positionsinformationen der mindestens einen Grenze; und Steuern (103) einer intelligenten Vorrichtung zum Bewegen zur Zielgrenze und zum Erfassen, durch einen Abstandssensor, von Anwesenheitswahrscheinlichkeit eines Hindernisses an der unbekannten Position, die in der Gitterkarte beinhaltet ist; und wobei die Grenze ein Mittelpunkt einer Gitterzelle in der Gitterkarte ist, die unbesetzt ist und an eine Grenze zwischen der unbekannten Gitterzelle und der unbesetzten Gitterzelle angrenzt.

**Revendications**

1. Procédé de détection d'une probabilité de présence d'un obstacle à une position inconnue, le procédé comprenant :

l'établissement d'une carte quadrillée pour une région cible, la carte quadrillée comprenant des cellules de quadrillage inoccupées, des cellules de quadrillage occupées et des cellules de quadrillage inconnues ; le procédé étant **caractérisé par** :

l'étiquetage d'une cellule de quadrillage inoccupée adjacente à une cellule de quadrillage inconnue en tant que cellule de quadrillage inconnue sur une carte quadrillée en cours d'établissement dans un prétraitement ; la détermination (101) d'au moins une frontière incluse dans la carte quadrillée en cours d'établissement pendant un processus de détection mobile pour l'établissement de la carte quadrillée pour la région cible ; la détermination (102) d'une frontière cible qui satisfait à une condition de détection prédéfinie parmi l'au moins une frontière en fonction d'informations de position concernant l'au moins une frontière ; et le contrôle (103) d'un dispositif intelligent pour qu'il se déplace vers la frontière cible et détecte, au moyen d'un capteur de distance, la probabilité de présence d'un obstacle à la position inconnue incluse dans la carte quadrillée ; et la frontière étant un point central d'une cellule de quadrillage sur la carte quadrillée qui est inoccupée et qui est adjacente à une bordure entre la cellule de quadrillage inconnue et la cellule de quadrillage inoccupée.

2. Procédé selon la revendication 1, **caractérisé en ce que** la détermination (102) de la frontière cible satisfaisant à la condition de détection prédéfinie parmi l'au moins une frontière en fonction des informations de position concernant l'au moins une frontière comprend :

la détermination (2021) d'au moins une région de frontière en fonction des informations de position concernant l'au moins une frontière, chacune des au moins une région de frontière comprenant au moins une frontière, et une distance entre deux frontières quelconques appartenant à des régions de frontière différentes étant supérieure à une valeur prédéfinie ; la sélection (2022) d'une frontière candidate parmi chacune des au moins une frontière incluse dans chacune des au moins une région de frontière ; et la détermination (2023) de la frontière cible satisfaisant à la condition de détection prédéfinie parmi les frontières candidates qui ont été sélectionnées.

**3.** Procédé selon la revendication 2, **caractérisé en ce que** la sélection (2022) de la frontière candidate parmi l'au moins une frontière incluse dans chacune des au moins une région de frontière comprend :
la détermination, parmi les frontières incluses dans chacune des au moins une région de frontière, d'une frontière située à la position centrale en tant que frontière candidate correspondant à chacune des au moins une région de frontière.

**4.** Procédé selon la revendication 2, **caractérisé en ce que** la détermination (2023) de la frontière cible satisfaisant à la condition de détection prédéfinie parmi les frontières candidates qui ont été sélectionnées comprend :

la détermination d'une quantité de frontières incluse dans chacune des au moins une région de frontière, et la détermination d'une frontière candidate correspondant à une région de frontière ayant la plus grande quantité de frontières en tant que frontière cible ; ou
la détermination d'une longueur de chemin de navigation entre un point de position courante et chacune des frontières candidates, et la détermination d'une frontière candidate correspondant à une longueur de chemin de navigation minimale en tant que frontière cible ; ou
la détermination d'une quantité de frontières incluse dans chacune des au moins une région de frontière et la détermination d'une longueur de chemin de navigation entre un point de position courante et chacune des frontières candidates, l'exécution d'une opération de pondération en fonction d'un coefficient de pondération prédéfini de la longueur de chemin de navigation et d'un coefficient de pondération prédéfini de la quantité de frontières, ainsi que de la longueur de chemin de navigation correspondant à chacune des au moins une frontière candidate et de la quantité de frontières incluse dans chacune des au moins une région de frontière à laquelle appartient chacune des au moins une frontière candidate pour déterminer une valeur pondérée correspondant à chacune des au moins une frontière candidate, et la détermination d'une frontière candidate correspondant à une valeur pondérée maximale en tant que frontière cible.

**5.** Procédé selon l'une quelconque des revendications 1 à 4, **caractérisé en ce que** la détermination (101) d'au moins une frontière incluse dans la carte quadrillée en cours d'établissement pendant le processus de détection mobile pour l'établissement de la carte quadrillée pour une région cible comprend :
pendant le processus de détection mobile pour l'établissement de la carte quadrillée pour la région cible, la détermination d'au moins une frontière incluse dans la carte quadrillée en cours d'établissement lorsqu'une incertitude de pose d'un point de position courante est inférieure à un premier seuil prédéfini, la correction d'informations de position concernant des cases respectives de la carte quadrillée en cours d'établissement en fonction d'une détection en boucle fermée lorsque l'incertitude de pose du point de position courante est supérieure ou égale au premier seuil prédéfini, et la détermination de l'au moins une frontière incluse dans la carte quadrillée en cours d'établissement après la correction.

**6.** Procédé selon la revendication 5, **caractérisé en ce que** la correction des informations de position concernant les cases respectives de la carte quadrillée en cours d'établissement comprend :

la sélection (701) d'un noeud topologique à boucle fermée parmi au moins un noeud topologique cible parmi des noeuds topologiques déterminés, une distance topologique entre l'au moins un noeud topologique cible et le point de position courante étant supérieure à un deuxième seuil prédéfini et une distance en cases entre l'au moins un noeud topologique cible et le point de position courante étant inférieure à un troisième seuil prédéfini ;
la commande (702), en fonction d'informations de position concernant le noeud topologique à boucle fermée, du dispositif intelligent pour qu'il se déplace vers le noeud topologique à boucle fermée ;
la détermination (703), en fonction d'informations d'obstacle détectées après que le dispositif intelligent s'est déplacé vers le noeud topologique à boucle fermée, d'informations de position courante concernant le dispositif intelligent après que le dispositif intelligent s'est déplacé vers le noeud topologique à boucle fermée ;
la correction (704), en fonction des informations de position courante et des informations de position du noeud topologique à boucle fermée, d'informations de position concernant le noeud topologique déterminé ; et
la correction (705), en fonction des informations de position concernant le noeud topologique déterminé, des informations de position concernant des cases respectives de la carte quadrillée établie.

**7.** Procédé selon la revendication 6, **caractérisé en ce que** la sélection (701) d'un noeud topologique à boucle fermée parmi au moins un noeud topologique cible parmi des noeuds topologiques déterminés, une distance topologique entre l'au moins un noeud topologique cible et le point de position courante étant supérieure à un deuxième seuil prédéfini et une distance en cases entre l'au moins un noeud topologique cible et le point de position courante étant inférieure à un troisième seuil prédéfini, comprend :

la sélection d'un noeud topologique à boucle fermée parmi l'au moins un noeud topologique cible lorsque le point de position courante est déterminé en tant que noeud topologique et qu'une distance topologique entre l'au moins un noeud topologique cible parmi les noeuds topologiques déterminés et le point de position courante est supérieure au deuxième seuil prédéfini et qu'une distance en cases entre l'au moins un noeud topologique cible parmi les noeuds topologiques déterminés et le point de position courante est inférieure au troisième seuil prédéfini.

**8.** Procédé selon la revendication 6 ou 7, **caractérisé en ce que** les noeuds topologiques déterminés dans le processus de détection mobile sont un point de position auquel le processus de détection mobile démarre et une position sur une trajectoire de déplacement ayant une distance en cases par rapport à un noeud topologique précédant est égale à une valeur prédéfinie ; ou

les noeuds topologiques déterminés dans le processus de détection mobile sont un point de position auquel le processus de détection mobile démarre et un point de position parmi des points de position ayant la distance en cases la plus courte par rapport à un noeud topologique précédant, un obstacle existant sur une ligne connectant les points de positions respectifs et le noeud topologique précédant ; ou

les noeuds topologiques déterminés dans le processus de détection mobile sont un point de position auquel le processus de détection mobile démarre, un point de position sur une trajectoire de déplacement ayant une distance en cases par rapport à un noeud topologique précédant égale à une valeur prédéfinie, et un point de position parmi des points de position ayant la distance en cases la plus courte par rapport à un noeud topologique précédant, un obstacle existant sur une ligne connectant les points de positions respectifs et le noeud topologique précédant.

**9.** Procédé selon l'une quelconque des revendications 6 à 8, **caractérisé en ce que** la sélection (701) du noeud topologique à boucle fermée parmi au moins un noeud topologique cible parmi des noeuds topologiques déterminés, la distance topologique entre l'au moins un noeud topologique cible et le point de position courante étant supérieure au deuxième seuil prédéfini et une distance en cases entre l'au moins un noeud topologique cible et le point de position courante étant inférieure au troisième seuil prédéfini, comprend :

la sélection du noeud topologique à boucle fermée parmi l'au moins un noeud topologique cible lorsque l'au moins un noeud topologique cible se trouve parmi les noeuds topologiques déterminés, la distance topologique entre l'au moins un noeud topologique cible et le point de position courante étant supérieure au deuxième seuil prédéfini et une distance en cases entre l'au moins un noeud topologique cible et le point de position courante étant inférieure au troisième seuil, et une incertitude de pose du point de position courante étant supérieure à un quatrième seuil prédéfini.

**10.** Procédé selon l'une quelconque des revendications 6 à 9, **caractérisé en ce que** la sélection (701) du noeud topologique à boucle fermée parmi l'au moins un noeud topologique cible comprend :

la détermination d'une longueur de chemin de navigation entre le point de position courante et chacun de l'au moins un noeud topologique cible, et la sélection, à partir de l'au moins un noeud topologique cible, d'un noeud topologique cible correspondant à une longueur de chemin de navigation minimale en tant que noeud topologique à boucle fermée ; ou la sélection, parmi l'au moins un noeud topologique cible, d'un noeud topologique cible ayant une incertitude de pose minimale en tant que noeud topologique à boucle fermée ; ou la détermination d'une longueur de chemin de navigation entre le point de position courante et chacun de l'au moins un noeud topologique cible, l'exécution d'une opération de pondération en fonction d'un coefficient de pondération prédéfini de l'incertitude de pose et d'un coefficient de pondération prédéfini de la longueur de chemin de navigation, ainsi que de la longueur de chemin de navigation et de l'incertitude de pose correspondant à chacun de l'au moins un noeud topologique cible, pour déterminer une valeur pondérée correspondant à chacun de l'au moins un noeud topologique cible, et la sélection, parmi l'au moins un noeud topologique cible, d'un noeud topologique cible ayant la valeur pondérée minimale en tant que noeud topologique à boucle fermée.

**11.** Procédé selon l'une quelconque des revendications 1 à 10, **caractérisé en ce que**, après la détection d'une probabilité de présence d'un obstacle à la position inconnue incluse dans la carte, le procédé comprend en outre :

la mise à jour de la carte avec la probabilité de présence d'un obstacle détectée à la position inconnue ; et

l'exécution du processus de détermination d'au moins une frontière incluse dans la carte en cours d'établissement lorsque la carte mise à jour comprend en outre une position inconnue.

**12.** Support de stockage non transitoire, lisible par ordinateur, **caractérisé en ce qu'**un programme informatique est stocké sur le support de stockage, le programme informatique, lorsqu'il est exécuté par un processeur, amenant le processeur à exécuter les étapes du procédé selon l'une quelconque des revendications 1 à 11.

**13.** Terminal, lequel terminal comprend :

un ou plusieurs processeurs (180) ; et
une mémoire (120) ;
un ou plusieurs programmes étant stockés dans la mémoire (120), le ou les programmes étant configurés pour être exécutés par le ou les processeurs (180), et le ou les programmes comprenant des instructions configurées pour exécuter les étapes suivantes :

l'établissement d'une carte quadrillée pour une région cible, la carte quadrillée comprenant des cellules de quadrillage inoccupées, des cellules de quadrillage occupées et des cellules de quadrillage inconnues ;
**caractérisé par** :

l'étiquetage d'une cellule de quadrillage inoccupée adjacente à une cellule de quadrillage inconnue en tant que cellule de quadrillage inconnue sur une carte quadrillée en cours d'établissement dans un prétraitement ;
la détermination (101) d'au moins une frontière incluse dans la carte quadrillée en cours d'établissement pendant un processus de détection mobile pour l'établissement de la carte quadrillée pour la région cible ;
la détermination (102) d'une frontière cible qui satisfait à une condition de détection prédéfinie parmi l'au moins une frontière en fonction d'informations de position concernant l'au moins une frontière ; et
le contrôle (103) d'un dispositif intelligent pour qu'il se déplace vers la frontière cible et détecte, au moyen d'un capteur de distance, la probabilité de présence d'un obstacle à la position inconnue incluse dans la carte quadrillée ; et
la frontière étant un point central d'une cellule de quadrillage sur la carte quadrillée qui est inoccupée et qui est adjacente à une bordure entre la cellule de quadrillage inconnue et la cellule de quadrillage inoccupée.

| During a mobile detection process for establishing a map for a target region, determining at least one frontier comprised in a currently established map | 101 |

| Determining a target frontier satisfying a preset detection condition from the at least one frontier based on the position information of at least one frontier | 102 |

| Controlling the smart device to move to the target frontier, and to detect presence probability of obstacle in the unknown position included in the map | 103 |

FIG. 1

| Determining at least one frontier included in a currently established grid map during a mobile detection process for establishing a grid map for a target region | 201 |

| Determining a target frontier satisfying a preset detection condition from the at least one frontier based on the position information of at least one frontier | 202 |

| Controlling the smart device to move to the target frontier, and to detect a presence probability of obstacle in an unknown grid included in the grid map | 203 |

FIG. 2

FIG. 3

| Determining at least one frontier region is determined based on the position information of at least one frontier | 2021 |

| Selecting a candidate frontier from the frontiers included in each frontier region | 2022 |

| Selecting a target frontier satisfying a preset detection condition from the at least one selected candidate frontier | 2023 |

FIG. 4

FIG. 5

FIG. 6

33

Frontier region B   Candidate frontier

Target frontier D

Current position point

Frontier region A  Candidate frontier

Target frontier E

FIG. 7            FIG. 8

Selecting a closed-loop topological node from at least one target topological node among the determined topological node, wherein the closed-loop topological node has a topological distance to the current position point greater than a second preset threshold and has a grid distance to the current position pint less than a third preset threshold — 701

Controlling the smart device to move to the closed-loop topological node based on the position information of the closed-loop topological node — 702

Determining the actual position information after the smart device moves to the closed-loop topological node based on the obstacle information detected after the smart device moves to the closed-loop topological node — 703

Correcting the position information of the determined topological node based on the actual position information and the position information of the closed-loop topological node — 704

Correcting the position information of each grid in the established grid map based on the position information of the determined topological node — 705

FIG. 9

FIG. 10

During the mobile detection process for establishing a grid map for a target region, each time a topological node is determined, if at least one target topological node has a topological distance to the current topological node is greater than a fifth preset threshold and has a grid distance to the current topological distance less than a sixth preset threshold exists in determined topological nodes, selecting a closed-loop topological node from the at least one target topological node

901

Controlling the smart device to move to the closed-loop topological node based on the position information of the closed-loop topological node

902

Determining the actual position information after the smart device moves to the closed-loop topological node based on the obstacle information detected after the smart device moves to the closed-loop topological node

903

Correcting the position information of the determined topological node based on the actual position information and the position information of the closed-loop topological node

904

FIG. 11

Obstacle

Obstacle

Obstacle

Obstacle

Obstacle

Obstacle

Obstacle

A | Obstacle | B
X

Navigation path 1  Navigation path 2

FIG. 12

Obstacle

Obstacle

Obstacle

Obstacle

Obstacle

Obstacle

Obstacle

(0, 0)
A | Obstacle
X  A1

(0, -5)

FIG. 13

First determining
module ⌐1210

Second determining
module ⌐1220

Detecting module ⌐1230

FIG. 14

First determining
module ⌐1210

Second determining
module ⌐1220
First determining
submodule ⌐1221

Selecting
submodule ⌐1222

Second determining
submodule ⌐1223

Detecting module ⌐1230

FIG. 15

First determining
module ⌐1210
Second selecting
submodule ⌐1211

Control submodule ⌐1212

Third determining
submodule ⌐1213

Correcting
submodule ⌐1214

Second determining
module ⌐1220

Detecting module ⌐1230

FIG. 16

First determining module — 1210

Second determining module — 1220

Detecting module — 1230

Updating module — 1240

Judging module — 1250

FIG. 17

Selecting module — 1610

Control module — 1620

Determining module — 1630

Correcting module — 1640

FIG. 18

Smart device 1700

110 — RF circuit

170 — WiFi module

190 — Power supply

180 — Processor

160 — Audio circuit

161

162

120 — Memory

150 — Sensor

130 — Input unit

131 — Touch sensitive surface

132 — Other input devices

140 — Display unit

141 — Display panel

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009149990 A1

- US 2016062361 A1